(19) Europäisches Patentamt
European Patent Office
Office européen des brevets

(11) **EP 2 408 208 A1**

(12) **EUROPEAN PATENT APPLICATION**

(43) Date of publication:
**18.01.2012 Bulletin 2012/03**

(51) Int Cl.:
*H04N 7/26* (2006.01)  *H04N 7/50* (2006.01)
*H04N 13/00* (2006.01)

(21) Application number: **11170917.6**

(22) Date of filing: **22.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.07.2010 JP 2010161303**

(71) Applicant: **Sony Corporation**
**Tokyo 108-0075 (JP)**

(72) Inventors:
• **Takahashi, Yoshimoto**
  **Minato-ku, Tokyo 108-0075 (JP)**
• **Suzuki, Teruhiko**
  **Minato-ku, Tokyo 108-0075 (JP)**
• **Kitamura, Takuya**
  **Minato-ku, Tokyo 108-0075 (JP)**

(74) Representative: **Robinson, Nigel Alexander Julian**
**D Young & Co LLP**
**120 Holborn**
**London EC1N 2DY (GB)**

(54) **Image processing device and image processing method**

(57)    The present disclosure provides an image processing device including, a feature quantity generating section configured to generate a feature quantity used as a determination criterion for determining which of a temporal prediction using correlation between images in a temporal direction and a parallactic prediction using correlation between images of different visual points is dominant in image coding, and a reference index assigning section configured to assign reference indices to reference pictures used in the predictions on a basis of the feature quantity generated by the feature quantity generating section.

F I G . 3

EP 2 408 208 A1

## Description

The present technology relates to an image processing device and an image processing method, and is particularly intended to improve coding efficiency in the coding of multiple visual point images.

Recently, devices handling image information as digital data, and storing or transmitting the information with high efficiency at the time of handling the image information as digital data, for example devices in compliance with a system such as MPEG (Moving Picture Experts Group) or the like which devices perform compression by an orthogonal transform process such as a discrete cosine transform or the like and motion compensation, have been coming into wide use in broadcasting stations and ordinary households.

MPEG-2 (ISO/IEC13818-2), in particular, is defined as a general-purpose image coding system, and is now used widely in a wide range of applications for professional uses and consumer uses. Further, an image coding system of H.264 and MPEG-4 Part 10 (hereinafter written as "H.264/AVC (Advanced Video Coding)"), which needs a larger amount of calculation for coding and decoding but is able to achieve higher coding efficiency than the coding system of MPEG-2, has been standardized.

Such an image coding system compresses an amount of information by reducing redundancy in a temporal direction and a spatial direction. For example, in a case of an I-picture for which intra-picture predictive coding intended to reduce spatial redundancy is performed, a prediction image is generated using correlation between pixels. In a case of a P-picture for which inter-picture predictive coding intended to reduce temporal redundancy is performed, motion vectors are detected in block units referring to a forward image, and a prediction image is generated using the detected motion vectors. Further, in a case of a B-picture, motion vectors are detected in block units referring to a forward picture and a backward picture, and a prediction image is generated using the detected motion vectors. Incidentally, in the case of the B-picture, a first reference picture is referred to as a reference picture of L0 prediction, and a second reference picture is referred to as a reference picture of L1 prediction.

The H.264/AVC system allows reference pictures to be selected from a plurality of already coded pictures. In addition, the selected reference pictures are managed by reference indices. A reference index is used as information indicating a picture to which a detected motion vector refers, and is coded together with information indicating the detected motion vector.

A value of zero or more is set to a reference index. In addition, the smaller the value of the reference index, the smaller an amount of information (amount of code) after coding of the reference index. Further, the assignment of reference indices to reference pictures can be set freely. Thus, assigning a reference index of a small number to a reference picture referred to by a large number of motion vectors can reduce an amount of code when reference indices are coded, and thereby improve coding efficiency.

In addition, in Japanese Patent Laid-Open No. 2010-63092, when a 2D image of an interlaced scanning system is subjected to field coding, a reference index of a small value is assigned to a reference picture temporally close to a coding object picture.

In frame sequential (FS)-AVC and multiview video coding (MVC), not only temporal prediction using correlation between images in a temporal direction but also parallactic prediction using correlation between images of different visual points is performed.

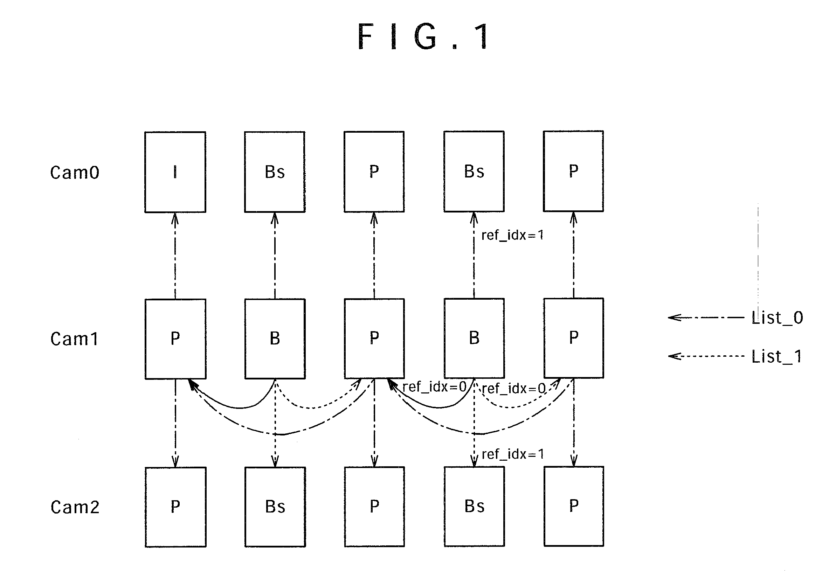

FIG. 1 shows prediction reference relation when the moving image data of three visual points is coded, for example. Incidentally, suppose that Cam0 denotes image data of a visual point from a left side, that Cam1 denotes image data of a central visual point, and that Cam2 denotes image data of a visual point from a right side. In addition, suppose that the image data of Cam1 is image data of a dependent view, which is coded using the image data of Cam0 and Cam2 as image data of reference pictures. Further, the image data referred to when the image data of the dependent view is coded is referred to as image data of a base view.

In addition, a B-picture in the image data of Cam1 sets one of a P-picture of Cam1 which picture is referred to in forward prediction and a Bs picture of Cam0 which picture is referred to in parallactic prediction as a reference picture in L0 prediction (List_0), for example, as indicated by arrows of alternate long and short dashed lines. In addition, the B-picture sets one of a P-picture of Cam1 which picture is referred to in backward prediction and a Bs picture of Cam2 which picture is referred to in parallactic prediction as a reference picture in L1 prediction (List_1), for example, as indicated by arrows of dotted lines.

The two pictures usable in LIST_X (X is 0 or 1) are managed by numbers of reference indices ref_idx, and are assigned a value of zero or more. In addition, the reference indices ref_idx are variable-length-coded, and are included in image data after coding. Incidentally, FIG. 1 illustrates a case where a reference index ref_idx = 0 is assigned to a reference picture for temporal prediction, and a reference index ref_idx = 1 is assigned to a reference picture for parallactic prediction. In addition, the variable length coding of the reference indices ref_idx makes the code length of the reference index ref_idx = 0 shorter than that of the reference index ref_idx = 1, for example.

The assignments of such reference indices are usually fixed over an entire sequence. Thus, in coding of the image data of Cam1 as dependent view, when reference pictures of the reference index having the longer code length are used frequently, an amount of information of the reference indices is increased, and high coding efficiency cannot be obtained.

It is accordingly desirable to provide an image processing device and an image processing method that can improve coding efficiency in the coding of multiple visual point images.

According to a first embodiment of the present disclosure, there is provided an image processing device including: a feature quantity generating section for generating a feature quantity used as a determination criterion for determining which of a temporal prediction using correlation between images in a temporal direction and a parallactic prediction using correlation between images of different visual points is dominant in image coding; and a reference index assigning section for assigning reference indices to reference pictures used in the predictions on a basis of the feature quantity generated by the feature quantity generating section.

In this technology, a feature quantity used as a determination criterion for determining which of a temporal prediction using correlation between images in a temporal direction and a parallactic prediction using correlation between images of different visual points is dominant in image coding is generated from information obtained by the predictions, or for example motion vectors and parallax vectors, or errors between coding object blocks and reference blocks. On the basis of the feature quantity, the reference picture used in the dominant prediction is assigned the reference index having a shorter code length than the reference index assigned to the reference picture used in the other prediction. In addition, the detection of an image switching position, for example the detection of a scene change or the detection of image switching from a multiple visual point image to another image, is performed. When a scene change is detected or switching from a multiple visual point image to another image is detected, the reference picture used in the parallactic prediction is assigned the reference index having a shorter code length than the reference index assigned to the reference picture used in the temporal prediction. Further, when reference pictures used in temporal prediction and parallactic prediction are assigned a reference index in each of L0 prediction and L1 prediction, a same reference index is assigned in each of temporal prediction and parallactic prediction.

According to a second embodiment of the present disclosure, there is provided an image processing method including: generating a feature quantity used as a determination criterion for determining which of a temporal prediction using correlation between images in a temporal direction and a parallactic prediction using correlation between images of different visual points is dominant in image coding; and assigning reference indices to reference pictures used in the predictions on a basis of the generated feature quantity.

According to the present disclosure, a feature quantity used as a determination criterion for determining which of a temporal prediction using correlation between images in a temporal direction and a parallactic prediction using correlation between images of different visual points is dominant in image coding is generated, and reference indices are assigned to reference pictures used in the predictions on a basis of the feature quantity. For example, the reference picture used in the dominant prediction is assigned the reference index having a shorter code length than the reference index assigned to the reference picture used in the other prediction. Thus, an amount of code of the reference indices can be reduced, and coding efficiency in the coding of multiple visual point images can be improved.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:

> FIG. 1 is a diagram showing prediction reference relation when the moving image data of three visual points is coded;
> FIG. 2 is a diagram showing an example of configuration of a coding system;
> FIG. 3 is a diagram showing a configuration of a first embodiment;
> FIG. 4 is a flowchart showing an operation of the first embodiment;
> FIG. 5 is a diagram showing a configuration of a second embodiment;
> FIG. 6 is a diagram illustrating a case where a degree of complexity is used as a feature quantity;
> FIG. 7 is a flowchart showing an operation of the second embodiment;
> FIG. 8 is a diagram showing a configuration of a third embodiment;
> FIG. 9 is a flowchart showing an operation of the third embodiment;
> FIG. 10 is a diagram showing a configuration of a fourth embodiment;
> FIG. 11 is a flowchart showing an operation of the fourth embodiment; and
> FIG. 12 is a diagram illustrating a configuration of a computer device.

Preferred embodiments of the present disclosure will hereinafter be described. Incidentally, description will be made in the following order.

> 1. Example of Configuration of Coding System
> 2. First Embodiment (Case of Generating Feature Quantity in PreProcessing)
> 3. Second Embodiment (Case of Using Feedback Information as Feature Quantity)
> 4. Third Embodiment (Case of Using Scene Change Detection Result as Feature Quantity)
> 5. Fourth Embodiment (Case of Using 2D Image Detection Result as Feature Quantity)

6. Fifth Embodiment (Case of Taking Bidirectional Prediction into Account)

7. Configuration in Case where Image Coding is Performed by Software Processing

<1. Example of Configuration of Coding System>

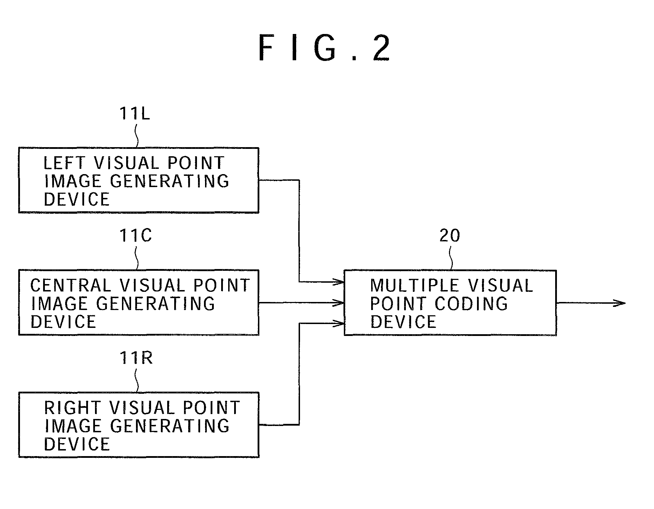

FIG. 2 is a diagram showing an example of configuration of a coding system to which the present technology is applied. The coding system 10 has a left visual point image generating device 11L, a right visual point image generating device 11R, a central visual point image generating device 11C, and a multiple visual point coding device 20.

The left visual point image generating device 11L is an imaging device or an image data generating device for generating the image data of a left visual point image. The right visual point image generating device 11R is an imaging device or an image data generating device for generating the image data of a right visual point image. The central visual point image generating device 11C is an imaging device or an image data generating device for generating the image data of a central visual point image. The left visual point image generating device 11L, the right visual point image generating device 11R, and the central visual point image generating device 11C operate in synchronism with each other.

The multiple visual point coding device 20 is supplied with the image data of the left visual point image which image data is generated by the left visual point image generating device 11L, the image data of the right visual point image which image data is generated by the right visual point image generating device 11R, and the image data of the central visual point image which image data is generated by the central visual point image generating device 11C. The multiple visual point coding device 20 codes the image data of the left visual point image, the image data of the right visual point image, and the image data of the central visual point image, multiplexes the resulting coded data, and outputs the multiplexed data as one bit stream.

The multiple visual point coding device 20 has an image processing device for coding the image data of the left visual point image which image data is input from the left visual point image generating device 11L as the image data of a base view, for example. In addition, the multiple visual point coding device 20 has an image processing device for coding the image data of the right visual point image which image data is input from the right visual point image generating device 11R as the image data of a base view, for example. Further, the multiple visual point coding device 20 has an image processing device according to the present technology for coding the image data of the central visual point image which image data is input from the central visual point image generating device 11C as the image data of a dependent view, for example. Incidentally, temporal prediction is performed for the image data of a base view without the image of another visual point being used as a reference picture, and temporal prediction and parallactic prediction using an image of a base view as a reference picture are performed for the image data of a dependent view.

<2. First Embodiment>

An image processing device according to the present technology will next be described. Incidentally, in the present embodiment and other embodiments to be described later, description will be made of a case where the image data of each visual point is independent, and an image processing device for coding the image data of a dependent view obtains the image data of a reference picture used for parallactic prediction and the like from an image processing device for coding the image data of a base view.

In the first embodiment, when the image data of a dependent view is coded, a feature quantity is generated which feature quantity is used as a determination criterion for determining which of temporal prediction using correlation between images in a temporal direction and parallactic prediction using correlation between images of different visual points is dominant within an image. Further, the assignment of a reference index is determined on the basis of the generated feature quantity. In addition, the first embodiment illustrates a case where the feature quantity is generated by performing preprocessing on a coding object picture.

[Configuration of First Embodiment]

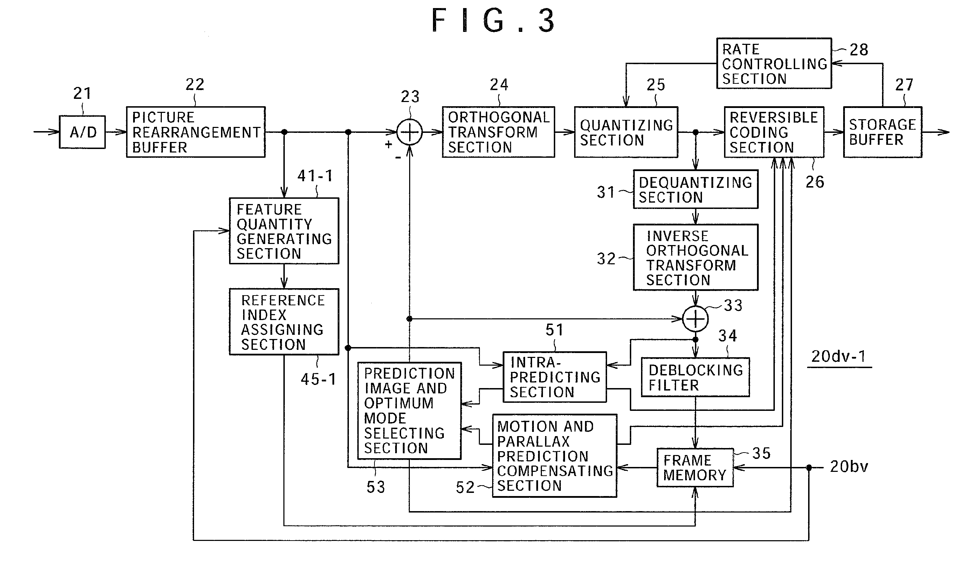

FIG. 3 shows a configuration of the first embodiment. An image coding device 20dv-1 is an image processing device for coding the image data of a dependent view. The image coding device 20dv-1 includes an analog-to-digital converting section (A/D converting section) 21, a picture rearrangement buffer 22, a subtracting section 23, an orthogonal transform section 24, a quantizing section 25, a reversible coding section 26, a storage buffer 27, and a rate controlling section 28. The image coding device 20dv-1 also includes a dequantizing section 31, an inverse orthogonal transform section 32, an adding section 33, a deblocking filter 34, and a frame memory 35. The image coding device 20dv-1 further includes a feature quantity generating section 41-1, a reference index assigning section 45-1, an intra-predicting section 51, a motion and parallax prediction compensating section 52, and a prediction image and optimum mode selecting section 53.

The A/D converting section 21 converts an analog image signal into digital image data, and outputs the digital image data to the picture rearrangement buffer 22.

The picture rearrangement buffer 22 rearranges frames of the image data output from the A/D converting section 21. The picture rearrangement buffer 22 rearranges the frames according to a GOP (Group of Pictures) structure involved in a coding process, and outputs the image data after the rearrangement to the subtracting section 23, the feature quantity generating section 41-1, the intra-predicting section 51, and the motion and parallax prediction compensating section 52.

The subtracting section 23 is supplied with the image data output from the picture rearrangement buffer 22 and prediction image data selected by the prediction image and optimum mode selecting section 53 to be described later. The subtracting section 23 calculates prediction error data indicating differences between the image data output from the picture rearrangement buffer 22 and the prediction image data supplied from the prediction image and optimum mode selecting section 53. The subtracting section 23 outputs the prediction error data to the orthogonal transform section 24.

The orthogonal transform section 24 subjects the prediction error data output from the subtracting section 23 to an orthogonal transform process such as a discrete cosine transform (DCT), a Karhunen-Loeve transform or the like. The orthogonal transform section 24 outputs transform coefficient data obtained by performing the orthogonal transform process to the quantizing section 25.

The quantizing section 25 is supplied with the transform coefficient data output from the orthogonal transform section 24 and a rate controlling signal from the rate controlling section 28 to be described later. The quantizing section 25 quantizes the transform coefficient data, and outputs the quantized data to the reversible coding section 26 and the dequantizing section 31. In addition, the quantizing section 25 changes a quantization parameter (quantization scale) on the basis of the rate controlling signal from the rate controlling section 28, and thereby changes the bit rate of the quantized data.

The reversible coding section 26 is supplied with the quantized data output from the quantizing section 25 and prediction mode information from the intra-predicting section 51, the motion and parallax prediction compensating section 52, and the prediction image and optimum mode selecting section 53 to be described later. Incidentally, the prediction mode information includes a macroblock type indicating the block size of a coding object block, a prediction mode, a reference index, and the like. The reversible coding section 26 subjects the quantized data to a coding process by variable-length coding or arithmetic coding, for example, thereby generates a coded stream, and outputs the coded stream to the storage buffer 27. In addition, the reversible coding section 26 reversibly codes the prediction mode information, and adds the coded prediction mode information to for example header information of the coded stream.

The storage buffer 27 stores the coded stream from the reversible coding section 26. In addition, the storage buffer 27 outputs the stored coded stream at a transmission speed corresponding to a transmission line.

The rate controlling section 28 monitors the free space of the storage buffer 27, generates the rate controlling signal according to the free space, and outputs the rate controlling signal to the quantizing section 25. The rate controlling section 28 for example obtains information indicating the free space from the storage buffer 27. When the free space is reduced, the rate controlling section 28 makes the bit rate of the quantized data decreased by the rate controlling signal. When the storage buffer 27 has a sufficiently large free space, the rate controlling section 28 makes the bit rate of the quantized data raised by the rate controlling signal.

The dequantizing section 31 subjects the quantized data supplied from the quantizing section 25 to a dequantizing process. The dequantizing section 31 outputs transform coefficient data obtained by performing the dequantizing process to the inverse orthogonal transform section 32.

The inverse orthogonal transform section 32 outputs data obtained by subjecting the transform coefficient data supplied from the dequantizing section 31 to an inverse orthogonal transform process to the adding section 33.

The adding section 33 generates the image data of a reference picture by adding together the data supplied from the inverse orthogonal transform section 32 and the prediction image data supplied from the prediction image and optimum mode selecting section 53. The adding section 33 outputs the image data to the deblocking filter 34 and the intra-predicting section 51.

The deblocking filter 34 performs filter processing to reduce block distortion occurring at a time of image coding. The deblocking filter 34 performs the filter processing to remove the block distortion from the image data supplied from the adding section 33. The deblocking filter 34 outputs the image data after the filter processing to the frame memory 35.

The frame memory 35 retains the image data after the filter processing which image data is supplied from the deblocking filter 34 and the image data of a reference picture supplied from an image coding device 20bv that performs coding for a base view.

The feature quantity generating section 41-1 generates a feature quantity. The feature quantity is information used as a determination criterion for determining which of temporal prediction using correlation between images in a temporal direction and parallactic prediction using correlation between images of different visual points is dominant within an image, that is, performed more frequently when the image data of a dependent view is coded. The feature quantity generating section 41-1 generates feature quantities from information obtained by performing temporal prediction and parallactic prediction.

The feature quantity generating section 41-1 detects a motion vector and a parallax vector for each coding object block using a reference picture, and sets an average value or a variance within an image of the lengths of the detected vectors as a feature quantity. For example, the feature quantity generating section 41-1 sets the image data of an image different in the temporal direction from a coding object picture in the image data output from the picture rearrangement buffer 22 as the image data of a reference picture to be used in temporal prediction. The feature quantity generating section 41-1 detects a motion vector for each coding block using the reference picture for temporal prediction, and sets an average or a variance within an image of the lengths of the detected motion vectors as a feature quantity. In addition, the feature quantity generating section 41-1 sets the image data of another visual point which image data is supplied from the image coding device 20dv as the image data of a reference picture to be used in parallactic prediction. The feature quantity generating section 41-1 detects a parallax vector for each coding object block using the reference picture for parallactic prediction, and sets an average or a variance within the image of the lengths of the detected parallax vectors as a feature quantity.

The feature quantity generating section 41-1 may also set a total value (for example a SAD: Sum of Absolute Differences) or an average value within the image of errors between the blocks of the coding object picture (coding object blocks) and the blocks of the reference picture (reference blocks) when the motion vectors or the parallax vectors are detected as a feature quantity. For example, the feature quantity generating section 41-1 detects a motion vector for each coding object block using the image data output from the picture rearrangement buffer 22 as the image data of a reference picture to be used in temporal prediction. The feature quantity generating section 41-1 sets a total value or an average value within the image of errors between the coding object blocks and the reference blocks when the motion vectors are detected as a feature quantity. In addition, the feature quantity generating section 41-1 detects a parallax vector for each coding object block using the image data of another visual point which image data is supplied from the image coding device 20dv. The feature quantity generating section 41-1 sets a total value or an average value within the image of errors between the coding object blocks and the reference blocks when the parallax vectors are detected as a feature quantity.

The feature quantity generating section 41-1 thus generates the feature quantity, and outputs the generated feature quantity to the reference index assigning section 45-1.

On the basis of the feature quantity generated in the feature quantity generating section 41-1, the reference index assigning section 45-1 assigns reference indices to the reference pictures stored in the frame memory 35. On the basis of the feature quantity, the reference index assigning section 45-1 assigns the reference picture used in dominant prediction a reference index having a shorter code length than a reference index assigned to the reference picture used in the other prediction.

When average values within the image of vectors (motion vectors and parallax vectors) are generated as feature quantities, the reference index assigning section 45-1 compares the average value when the reference picture for temporal prediction is used with the average value when the reference picture for parallactic prediction is used. The reference index assigning section 45-1 assigns the reference index of the shorter code length to the reference picture of the smaller average value. In addition, when variances within the image of the vectors are generated as feature quantities, the reference index assigning section 45-1 compares the variance when the reference picture for temporal prediction is used with the variance when the reference picture for parallactic prediction is used. The reference index assigning section 45-1 assigns the reference index of the shorter code length to the reference picture of the smaller variance. Further, when errors between each block of the coding object picture and reference blocks are generated as feature quantities, the reference index assigning section 45-1 compares the errors when the reference picture for temporal prediction is used with the errors when the reference picture for parallactic prediction is used. The reference index assigning section 45-1 assigns the reference index of the shorter code length to the reference picture of the smaller errors.

The intra-predicting section 51 performs an intra-prediction process in all intra-prediction modes as candidates using the image data of the coding object picture output from the picture rearrangement buffer 22 and the image data supplied from the adding section 33. Further, the intra-predicting section 51 calculates a cost function value for each intra-prediction mode, and selects an intra-prediction mode in which the calculated cost function value is a minimum, that is, an intra-prediction mode in which best coding efficiency is obtained as an optimum intra-prediction mode. The intra-predicting section 51 outputs prediction image data generated in the optimum intra-prediction mode, prediction mode information on the optimum intra-prediction mode, and the cost function value in the optimum intra-prediction mode to the prediction image and optimum mode selecting section 53. In addition, to obtain an amount of generated code which amount is used in calculation of the cost function value, the intra-predicting section 51 outputs, in the intra-prediction process in each intra-prediction mode, the prediction mode information on the intra-prediction mode to the reversible coding section 26. Incidentally, a method implemented in H.264/AVC reference software referred to as a JM (Joint Model), for example, can be cited for the generation of the cost function value.

The motion and parallax prediction compensating section 52 performs a motion and parallax prediction compensating process for each block size of coding object blocks. The motion and parallax prediction compensating section 52 detects a motion vector using the image data after the deblocking filter process which image data is read from the frame memory 35, and detects a parallax vector using the image data of the base view, for each image of each coding object block in the image read from the picture rearrangement buffer 22. Further, the motion and parallax prediction compensating section 52 performs a reference picture compensating process on the basis of the detected vectors, and generates prediction images.

In addition, the motion and parallax prediction compensating section 52 generates a cost function value for each block size of the coding object blocks and each reference picture, and selects the block size and the reference picture minimizing the cost function value as an optimum inter-prediction mode. The motion and parallax prediction compensating section 52 outputs prediction image data generated in the optimum inter-prediction mode, prediction mode information on the optimum inter-prediction mode, and the cost function value in the optimum inter-prediction mode to the prediction image and optimum mode selecting section 53. In addition, to obtain an amount of generated code which amount is used in generation of the cost function value, the motion and parallax prediction compensating section 52 outputs, in an inter-prediction process in each block size, the prediction mode information on the inter-prediction mode to the reversible coding section 26.

The prediction image and optimum mode selecting section 53 compares the cost function value supplied from the intra-predicting section 51 with the cost function value supplied from the motion and parallax prediction compensating section 52, and selects the smaller cost function value as an optimum mode in which best coding efficiency is obtained. In addition, the prediction image and optimum mode selecting section 53 outputs the prediction image data generated in the optimum mode to the subtracting section 23 and the adding section 33. Further, the prediction image and optimum mode selecting section 53 outputs the prediction mode information (the macroblock type, the prediction mode, the reference index and the like) of the optimum mode to the reversible coding section 26. Incidentally, the prediction image and optimum mode selecting section 53 performs intra-prediction or inter-prediction in picture units or slice units.

Incidentally, when image data of a frame sequential-AVC system in which images of different visual points are switched in frame units is coded, the feature quantity generating section 41-1 generates a feature quantity using the image data of another visual point which image data is extracted from the input image data. In addition, the image data of the other visual point which image data is extracted from the input image data or the image data of a reference picture generated by coding the image data of the other visual point is stored in the frame memory 35. The image data of the FS (Frame Sequential) system can also be coded by performing such a process.

[Operation of First Embodiment]

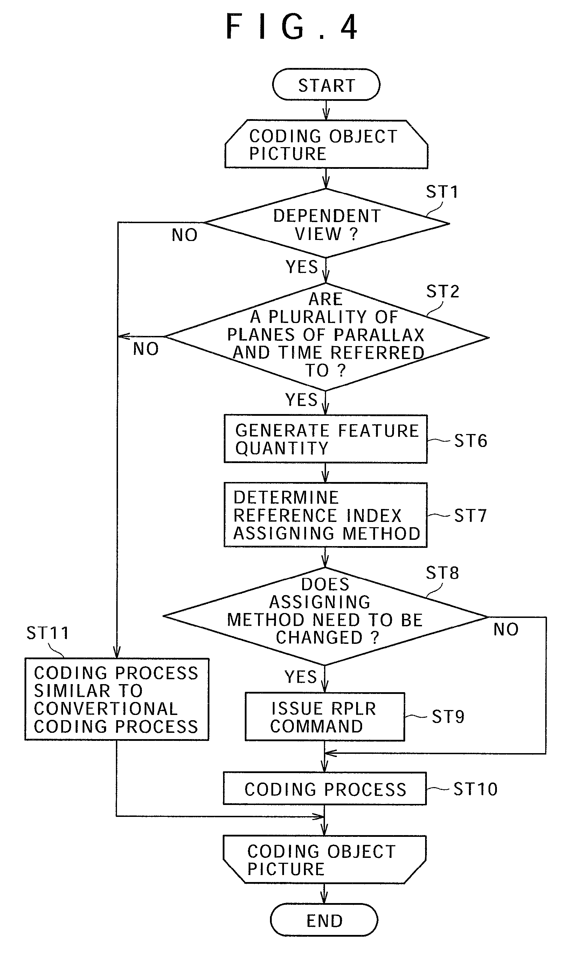

FIG. 4 is a flowchart showing an operation of the first embodiment. In step ST1, the image coding device 20dv-1 determines whether a coding object picture is a picture of a dependent view. The image coding device 20dv-1 proceeds to step ST2 when the coding object picture is a picture of a dependent view, and proceeds to step ST11 when the coding object picture is a picture of a base view.

In step ST2, the image coding device 20dv-1 determines whether the coding object picture refers to a plurality of planes of parallax or time. When the coding object picture refers to a plurality of planes of at least one of parallax and time, the image coding device 20dv-1 proceeds to step ST6. When the coding object picture refers to only one reference picture, the image coding device 20dv-1 proceeds to step ST11.

In step ST6, the image coding device 20dv-1 generates a feature quantity. The feature quantity generating section 41-1 in the image coding device 20dv-1 generates an average value within the image of parallax vectors detected for each block using a reference picture of a different visual point and an average value within the image of motion vectors detected for each block using a reference picture in a temporal direction, and sets the average values as feature quantities. In addition, the feature quantity generating section 41-1 may set variances of the vectors within the image as feature quantities. Further, the feature quantity generating section 41-1 may perform temporal prediction and parallactic prediction for each block, and generate total values or average values within the image of errors between the coding object blocks and reference blocks as feature quantities. The feature quantity generating section 41-1 thus generates the feature quantities, and then proceeds to step ST7.

In step ST7, the image coding device 20dv-1 determines a reference index assigning method. The reference index assigning section 45-1 in the image coding device 20dv-1 determines a reference index assigning method on the basis of the feature quantities generated in step ST6, and then proceeds to step ST8. The reference index assigning section 45-1 determines an assigning method so as to assign a reference index of a shorter code length to the reference picture used when the vectors of a smaller average value or a smaller variance are calculated, for example. In addition, the reference index assigning section 45-1 determines an assigning method so as to assign a reference index of a shorter code length to the reference picture used in one of the temporal prediction and the parallactic prediction with smaller errors, for example.

In step ST8, the image coding device 20dv-1 determines whether the assigning method needs to be changed. When the assigning method determined in step ST7 is different from a present assigning method, the image coding device 20dv-1 proceeds to step ST9. When the assigning method determined in step ST7 is the same as the present assigning method, the image coding device 20dv-1 proceeds to step ST10.

In step ST9, the image coding device 20dv-1 issues an RPLR (Reference Picture List Reordering) command. The reference index assigning section 45-1 in the image coding device 20dv-1 issues the RPLR command so that an image decoding device can use correct reference pictures on the basis of the reference indices even when the assignments of the reference indices are changed. Specifically, the reference index assigning section 45-1 supplies the RPLR as a syntax element to the reversible coding section 26 to include the RPLR in for example a header of the coded stream of image data, and then proceeds to step ST10.

In step ST10, the image coding device 20dv-1 performs a process of coding the coding object picture. In addition, in the coding process, the reference index assigning section 45-1 sets reference indices by the assigning method for subsequent pictures which assigning method is determined in step ST7.

In step ST11, the image coding device 20dv-1 assigns reference indices by an assigning method set in advance and performs a coding process when the coding object picture is a picture of a base view and when the coding object picture refers to one reference picture. For example, as shown in FIG. 1, a reference index ref_idx = 0 is assigned to the reference picture for temporal prediction, and a reference index ref_idx = 1 is assigned to the reference picture for parallactic prediction. In addition, when the coding object picture is a picture of a base view, the reference index assignments are fixed over an entire sequence. Such a process is performed for each coding picture.

According to the first embodiment, when temporal prediction or parallactic prediction is performed in a coding process for a dependent view, a reference index of a shorter code length can be assigned to a reference picture used in the prediction system performed frequently. The coding efficiency of the dependent view can therefore be enhanced.

<3. Second Embodiment>

In the first embodiment, description has been made of a case where a feature quantity is generated by preprocessing on a coding object picture. In a second embodiment, description will be made of a case where information generated in the generation of a prediction image is used as a feature quantity to assign reference indices.

[Configuration of Second Embodiment]

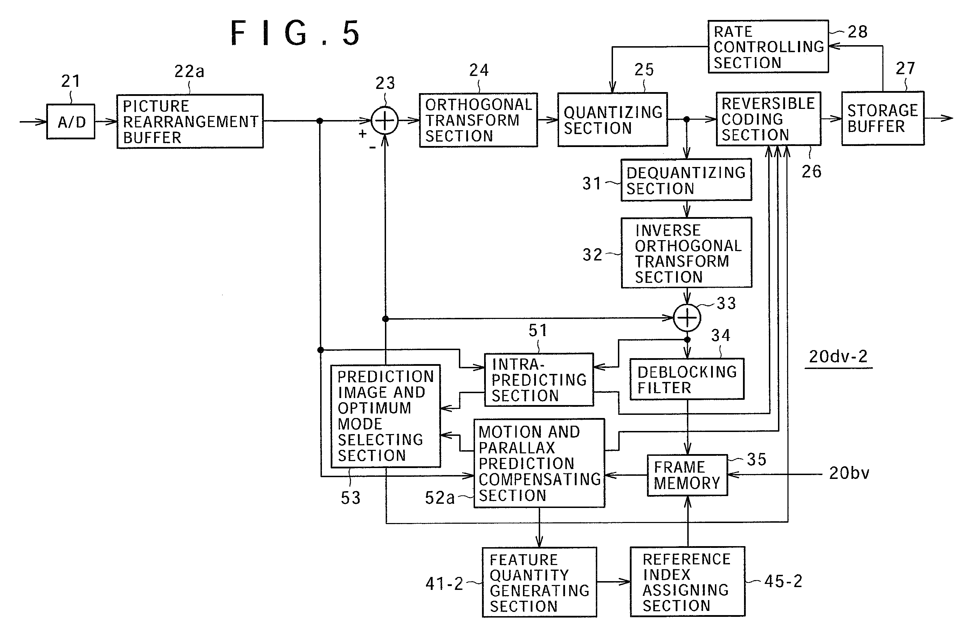

FIG. 5 shows a configuration of the second embodiment. Incidentally, parts corresponding to those of the image coding device 20dv-1 according to the first embodiment are identified by the same reference numerals.

An image coding device 20dv-2 is an image processing device for coding the image data of a dependent view. The image coding device 20dv-2 includes an analog-to-digital converting section (A/D converting section) 21, a picture rearrangement buffer 22a, a subtracting section 23, an orthogonal transform section 24, a quantizing section 25, a reversible coding section 26, a storage buffer 27, and a rate controlling section 28. The image coding device 20dv-2 also includes a dequantizing section 31, an inverse orthogonal transform section 32, an adding section 33, a deblocking filter 34, and a frame memory 35. The image coding device 20dv-2 further includes a reference index assigning section 45-2, an intra-predicting section 51, a motion and parallax prediction compensating section 52a, and a prediction image and optimum mode selecting section 53.

The A/D converting section 21 converts an analog image signal into digital image data, and outputs the digital image data to the picture rearrangement buffer 22a.

The picture rearrangement buffer 22a rearranges frames of the image data output from the A/D converting section 21. The picture rearrangement buffer 22a rearranges the frames according to a GOP (Group of Pictures) structure involved in a coding process, and outputs the image data after the rearrangement to the subtracting section 23, the intra-predicting section 51, and the motion and parallax prediction compensating section 52a.

The subtracting section 23 is supplied with the image data output from the picture rearrangement buffer 22a and prediction image data selected by the prediction image and optimum mode selecting section 53 to be described later. The subtracting section 23 calculates prediction error data indicating differences between the image data output from the picture rearrangement buffer 22a and the prediction image data supplied from the prediction image and optimum mode selecting section 53. The subtracting section 23 outputs the prediction error data to the orthogonal transform section 24.

The orthogonal transform section 24 subjects the prediction error data output from the subtracting section 23 to an orthogonal transform process such as a discrete cosine transform (DCT), a Karhunen-Loeve transform or the like. The orthogonal transform section 24 outputs transform coefficient data obtained by performing the orthogonal transform process to the quantizing section 25.

The quantizing section 25 is supplied with the transform coefficient data output from the orthogonal transform section 24 and a rate controlling signal from the rate controlling section 28 to be described later. The quantizing section 25 quantizes the transform coefficient data, and outputs the quantized data to the reversible coding section 26 and the dequantizing section 31. In addition, the quantizing section 25 changes a quantization parameter (quantization scale) on the basis of the rate controlling signal from the rate controlling section 28, and thereby changes the bit rate of the quantized data.

The reversible coding section 26 is supplied with the quantized data output from the quantizing section 25 and prediction mode information from the intra-predicting section 51, the motion and parallax prediction compensating section 52a, and the prediction image and optimum mode selecting section 53 to be described later. Incidentally, the prediction mode information includes a macroblock type indicating the block size of a coding object block, a prediction mode, a reference index, and the like. The reversible coding section 26 subjects the quantized data to a coding process by variable-length coding or arithmetic coding, for example, thereby generates a coded stream, and outputs the coded stream to the storage buffer 27. In addition, the reversible coding section 26 reversibly codes the prediction mode information, and adds the coded prediction mode information to for example header information of the coded stream.

The storage buffer 27 stores the coded stream from the reversible coding section 26. In addition, the storage buffer 27 outputs the stored coded stream at a transmission speed corresponding to a transmission line.

The rate controlling section 28 monitors the free space of the storage buffer 27, generates the rate controlling signal according to the free space, and outputs the rate controlling signal to the quantizing section 25. The rate controlling section 28 for example obtains information indicating the free space from the storage buffer 27. When the free space is reduced, the rate controlling section 28 makes the bit rate of the quantized data decreased by the rate controlling signal. When the storage buffer 27 has a sufficiently large free space, the rate controlling section 28 makes the bit rate of the quantized data raised by the rate controlling signal.

The dequantizing section 31 subjects the quantized data supplied from the quantizing section 25 to a dequantizing process. The dequantizing section 31 outputs transform coefficient data obtained by performing the dequantizing process to the inverse orthogonal transform section 32.

The inverse orthogonal transform section 32 outputs data obtained by subjecting the transform coefficient data supplied from the dequantizing section 31 to an inverse orthogonal transform process to the adding section 33.

The adding section 33 generates the image data of a reference picture by adding together the data supplied from the inverse orthogonal transform section 32 and the prediction image data supplied from the prediction image and optimum mode selecting section 53. The adding section 33 outputs the image data to the deblocking filter 34 and the intra-predicting section 51.

The deblocking filter 34 performs filter processing to reduce block distortion occurring at a time of image coding. The deblocking filter 34 performs the filter processing to remove the block distortion from the image data supplied from the adding section 33. The deblocking filter 34 outputs the image data after the filter processing to the frame memory 35.

The frame memory 35 retains the image data after the filter processing which image data is supplied from the deblocking filter 34 and the image data of a reference picture supplied from an image coding device 20bv that performs coding for a base view.

The feature quantity generating section 41-2 generates a feature quantity. The feature quantity is information used as a determination criterion for determining which of temporal prediction using correlation between images in a temporal direction and parallactic prediction using correlation between images of different visual points is dominant within an image, that is, performed more frequently when the image data of a dependent view is coded. The feature quantity generating section 41-2 generates feature quantities from information obtained by performing motion and parallax prediction compensation. The feature quantity generating section 41-2 sets, as a feature quantity, at least one of average values or variances within the image of the lengths of motion vectors and parallax vectors detected by motion and parallax prediction and a total value or an average value within the image of errors between coding object blocks and reference blocks when the motion vectors (parallax vectors) are detected. In addition, the feature quantity generating section 41-2 may set one of a cost function value, a degree of image complexity, a statistic indicating the ratio of a reference index in a coded picture, and the like as a feature quantity.

When an average value or a variance within the image of the lengths of vectors is used as a feature quantity, the feature quantity generating section 41-2 calculates the average value or the variance using the motion vector of each block which motion vector is detected to perform temporal prediction in the motion and parallax prediction compensating section 52a. In addition, the feature quantity generating section 41-2 calculates an average value or a variance of the lengths of parallax vectors within the image using the parallax vector of each block which parallax vector is detected to perform parallactic prediction in the motion and parallax prediction compensating section 52a, and sets the average value or the variance as a feature quantity. Incidentally, a motion vector (parallax vector) detected for each macroblock or each block size of a prediction mode is used as the motion vector (parallax vector).

When errors between the coding object blocks and reference blocks are used as a feature quantity, the feature quantity generating section 41-2 uses the errors between the coding object blocks and the reference blocks when the motion vectors are detected by motion detection using the reference picture for temporal prediction in the motion and parallax prediction compensating section 52a. In addition, the feature quantity generating section 41-2 sets, as a feature quantity, a total value within the screen of errors between the coding object blocks and reference blocks when the parallax vectors are detected using the reference picture for parallactic prediction in the motion and parallax prediction compensating section 52a.

When cost function values are used as a feature quantity, the feature quantity generating section 41-2 sets, as feature quantities, a total value or an average value within the image of cost function values when temporal prediction is performed in the motion and parallax prediction compensating section 52a and a total value or an average value within the image of cost function values when parallactic prediction is performed in the motion and parallax prediction compensating section 52a.

When degrees of complexity of coded pictures are used as a feature quantity, the feature quantity generating section 41-2 calculates the degrees of complexity of the coded pictures on the basis of Equations (1) to (3), for example, and sets the degrees of complexity of the coded pictures as feature quantities.

$$Xi = SiQi \quad \ldots(1)$$

$$Xp = SpQp \quad \ldots(2)$$

$$Xb = SbQb \quad \ldots(3)$$

In Equation (1), $Si$ denotes an amount of generated code of an I-picture, and $Qi$ denotes an average quantization scale code (quantization parameter) at the time of coding of the I-picture. Similarly, in Equations (2) and (3), $Sp$ and $Sb$ denote amounts of generated code of a P-picture and a B-picture, and $Qp$ and $Qb$ denote average quantization scale codes (quantization parameters) at the time of coding of the P-picture and the B-picture. In addition, suppose that of the pictures of a dependent view, for example, a degree of complexity of a P-picture using an I-picture of a base view as a single reference picture is $Xpd$.

When statistics indicating the ratios of reference indices are used as a feature quantity, the feature quantity generating section 41-2 calculates statistics indicating the ratios of the reference indices set for each block from a coded picture of the same picture type as that of the coding object picture, and sets the statistics as feature quantities.

The feature quantity generating section 41-2 thus generates the feature quantity, and outputs the generated feature quantity to the reference index assigning section 45-2.

On the basis of the feature quantity generated in the feature quantity generating section 41-2, the reference index assigning section 45-2 assigns reference indices to the reference pictures stored in the frame memory 35. On the basis of the feature quantity, the reference index assigning section 45-2 assigns the reference picture used in dominant prediction a reference index having a shorter code length than a reference index assigned to the reference picture used in the other prediction.

When average values within the image of vectors are generated as feature quantities, the reference index assigning section 45-2 compares the average value when the reference picture for temporal prediction is used with the average value when the reference picture for parallactic prediction is used. The reference index assigning section 45-2 assigns the reference index of the shorter code length to the reference picture of the smaller average value. In addition, when variances within the image of the vectors are generated as feature quantities, the reference index assigning section 45-2 compares the variance when the reference picture for temporal prediction is used with the variance when the reference picture for parallactic prediction is used. The reference index assigning section 45-2 assigns the reference index of the shorter code length to the reference picture of the smaller variance. In addition, when errors are generated for each coding object block as feature quantities, the reference index assigning section 45-2 compares the errors when the reference picture for temporal prediction is used with the errors when the reference picture for parallactic prediction is used. The reference index assigning section 45-2 assigns the reference index of the shorter code length to the reference picture of the smaller errors. In addition, when cost function values are generated as feature quantities, the reference index assigning section 45-2 compares the cost function value when the reference picture for temporal prediction is used with the cost function value when the reference picture for parallactic prediction is used. The reference index assigning section 45-2 assigns the reference index of the shorter code length to the reference picture of the smaller cost function value.

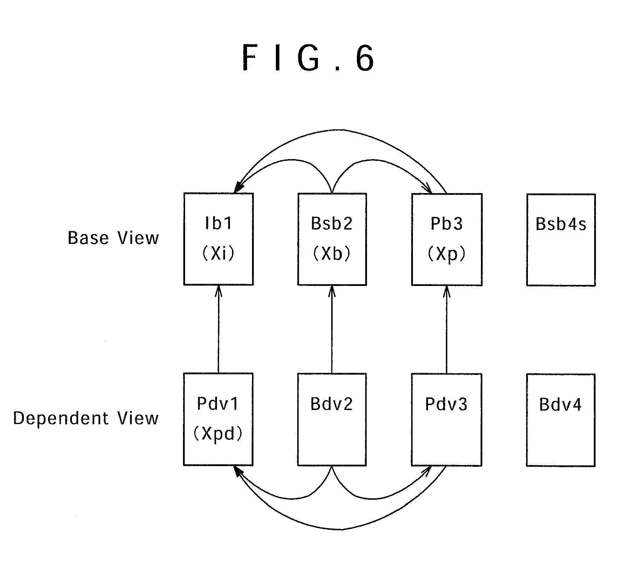

Further, when degrees of complexity are generated as feature quantities, the reference index assigning section 45-2 assigns reference indices according to a result of comparison of a ratio between degrees of temporal complexity with a ratio between degrees of complexity between parallaxes. As shown in FIG. 6, a ratio between degrees of complexity $(Xi/Xp)$ and a ratio between degrees of complexity $(Xi/Xb)$ indicate a temporal difficulty, and a ratio between degrees of complexity $(Xi/Xpd)$ indicates a difficulty between parallaxes. Incidentally, a degree of complexity $Xi$ indicates a degree of complexity of an I-picture (Ib1); a degree of complexity $Xp$ indicates a degree of complexity of a P-picture (Pb1); a degree of complexity $Xb$ indicates a degree of complexity of a B-picture (Bsb1); and a degree of complexity $Xpd$ indicates a degree of complexity of a P-picture (Pdv1).

Thus, the reference index assigning section 45-2 compares a temporal difficulty with a difficulty between parallaxes, and assigns the reference index of the shorter code length to the reference picture of a lower degree of complexity. For example, in a case where a P-picture (Pdv3) having a P-picture (Pb3) with a degree of complexity $Xp$ and the P-picture (Pdv1) with the degree of complexity $Xpd$ as reference pictures is coded, when the ratio $(Xi/Xpd)$ is higher than the ratio $(Xi/Xp)$, the degree of complexity Xpd is found to be lower than the degree of complexity Xp. Suppose for example that parallactic prediction for the P-picture (Pdv3) is equal in difficulty to parallactic prediction for the P-picture (Pdv1) and that temporal prediction for the P-picture (Pdv3) is equal in difficulty to temporal prediction for the P-picture (Pb3). In this case, the degree of complexity of the P-picture (Pdv3) is estimated to be lower when parallactic prediction is used than when temporal prediction is used. Thus, the reference index assigning section 45-2 assigns the reference index of the shorter code length to the reference picture used for parallactic prediction. In addition, as for a B-picture (Bdv2), reference indices can be assigned according to degrees of complexity as in the case of the P-picture (Pdv3) on the basis of the ratio (Xi/Xpd) and the ratio (Xi/Xb). For example, when the degree of complexity Xpd is lower than the degree of complexity Xb, the reference index assigning section 45-2 assigns the reference index of the shorter code length to the reference picture used for parallactic prediction.

Further, when statistics indicating the ratios of reference indices are used as a feature quantity, the reference index assigning section 45-2 assigns the reference index of the shorter code length to the reference picture used in the prediction of the higher ratio. For example, when the ratio of a reference index indicating a reference picture used in temporal prediction is higher than the ratio of a reference picture used in parallactic prediction within the image of the coding object picture, for example, the reference index assigning section 45-2 assigns the reference index of the shorter code length to the reference picture used in temporal prediction.

The intra-predicting section 51 performs an intra-prediction process in all intra-prediction modes as candidates using the image data of the coding object picture output from the picture rearrangement buffer 22a and the image data supplied from the adding section 33. Further, the intra-predicting section 51 calculates a cost function value for each intra-prediction mode, and selects an intra-prediction mode in which the calculated cost function value is a minimum, that is, an intra-prediction mode in which best coding efficiency is obtained as an optimum intra-prediction mode. The intra-predicting section 51 outputs prediction image data generated in the optimum intra-prediction mode, prediction mode information on the optimum intra-prediction mode, and the cost function value in the optimum intra-prediction mode to the prediction image and optimum mode selecting section 53. In addition, to obtain an amount of generated code which amount is used in calculation of the cost function value, the intra-predicting section 51 outputs, in the intra-prediction process in each intra-prediction mode, the prediction mode information on the intra-prediction mode to the reversible coding section 26. Incidentally, a method implemented in H.264/AVC reference software referred to as a JM (Joint Model), for example, can be cited for the calculation of the cost function value.

The motion and parallax prediction compensating section 52a performs a motion and parallax prediction compensating process for each block size of coding object blocks. The motion and parallax prediction compensating section 52a detects a motion vector and a parallax vector using the image data after the deblocking filter process which image data is read from the frame memory 35 and the image data of the base view, for each image of each coding object block in the image read from the picture rearrangement buffer 22a. Further, the motion and parallax prediction compensating section 52a performs a reference picture compensating process on the basis of the detected motion vector and the detected parallax vector, and generates prediction images.

In addition, the motion and parallax prediction compensating section 52a calculates a cost function value for each block size of the coding object blocks and each reference picture, and selects the block size and the reference picture minimizing the cost function value as an optimum inter-prediction mode. The motion and parallax prediction compensating section 52a outputs prediction image data generated in the optimum inter-prediction mode, prediction mode information on the optimum inter-prediction mode, and the cost function value in the optimum inter-prediction mode to the prediction image and optimum mode selecting section 53. In addition, to obtain an amount of generated code which amount is used in calculation of the cost function value, the motion and parallax prediction compensating section 52a outputs, in an inter-prediction process in each block size, the prediction mode information on the inter-prediction mode to the reversible coding section 26.

Further, the motion and parallax prediction compensating section 52a outputs information for generating feature quantities to the feature quantity generating section 41-2. The information for generating feature quantities is the detected motion vectors and the detected parallax vectors or the errors between the coding object blocks and reference blocks when the motion vectors and the parallax vectors are detected. In addition, cost function values, amounts of generated code and quantization scale codes, information on blocks where temporal prediction and parallactic prediction are performed in the optimum inter-prediction mode, and the like can be used as the information for generating feature quantities.

The prediction image and optimum mode selecting section 53 compares the cost function value supplied from the intra-predicting section 51 with the cost function value supplied from the motion and parallax prediction compensating section 52a, and selects the smaller cost function value as an optimum mode in which best coding efficiency is obtained. In addition, the prediction image and optimum mode selecting section 53 outputs the prediction image data generated in the optimum mode to the subtracting section 23 and the adding section 33. Further, the prediction image and optimum mode selecting section 53 outputs the prediction mode information (the macroblock type, the prediction mode, the reference index and the like) of the optimum mode to the reversible coding section 26. Incidentally, the prediction image and optimum mode selecting section 53 performs intra-prediction or inter-prediction in picture units or slice units.

Incidentally, when image data of the frame sequential-AVC system is coded, the feature quantity generating section 41-2 generates a feature quantity using information when the prediction images for the image data of the dependent view are generated in the motion and parallax prediction compensating section 52a. In addition, the image data of another visual point which image data is extracted from the input image data or the image data of a reference picture generated by coding the image data of the other visual point is stored in the frame memory 35. The image data of the frame sequential-AVC system can also be coded by performing such a process.

[Operation of Second Embodiment]

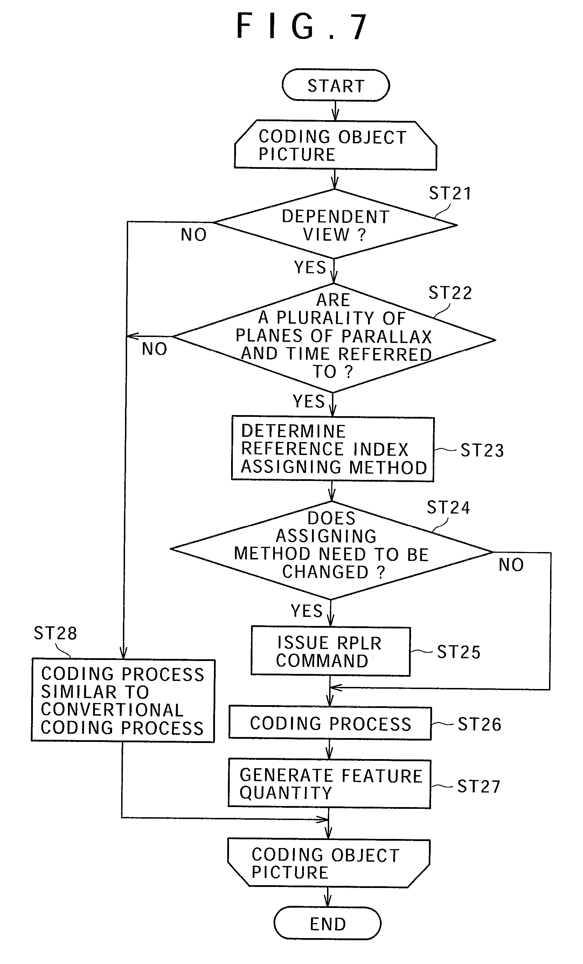

FIG. 7 is a flowchart showing an operation of the second embodiment. In step ST21, the image coding device 20dv-2 determines whether a coding object picture is a picture of a dependent view. The image coding device 20dv-2 proceeds to step ST22 when the coding object picture is a picture of a dependent view, and proceeds to step ST28 when the coding object picture is a picture of a base view.

In step ST22, the image coding device 20dv-2 determines whether the coding object picture refers to a plurality of planes of parallax or time. When the coding object picture refers to a plurality of planes of at least one of parallax and time, the image coding device 20dv-2 proceeds to step ST23. When the coding object picture refers to only one reference picture, the image coding device 20dv-2 proceeds to step ST28. For example, in the image data of the dependent view of FIG. 6, the first P-picture uses only the I-picture of the image data of the base view as a reference picture, and therefore the image coding device 20dv-2 proceeds to step ST28. The B-picture and the P-picture following the first P-picture use a plurality of reference pictures, and therefore the image coding device 20dv-2 proceeds to step ST23.

In step ST23, the image coding device 20dv-2 determines a reference index assigning method. The reference index assigning section 45-2 in the image coding device 20dv-2 determines a reference index assigning method on the basis of information generated in an already performed coding process for the coding object picture, and then proceeds to step ST24. The reference index assigning section 45-2 determines an assigning method so as to assign a reference index of a shorter code length to a reference picture from which a smaller average value or a smaller variance of the lengths of vectors is obtained or a reference picture from which smaller errors are obtained in temporal prediction or parallactic prediction, for example. In addition, the reference index assigning section 45-2 determines an assigning method so as to assign a reference index of a shorter code length to a reference picture from which a smaller cost function value is obtained, for example.

In step ST24, the image coding device 20dv-2 determines whether the assigning method needs to be changed. When the assigning method determined in step ST23 is different from a present assigning method, the image coding device 20dv-2 proceeds to step ST25. When the assigning method determined in step ST23 is the same as the present assigning method, the image coding device 20dv-2 proceeds to step ST26.

In step ST25, the image coding device 20dv-2 issues an RPLR (Reference Picture List Reordering) command. The reference index assigning section 45-2 in the image coding device 20dv-2 issues the RPLR command so that an image decoding device can use correct reference pictures on the basis of the reference indices even when the assignments of the reference indices are changed. Specifically, the reference index assigning section 45-2 supplies the RPLR as a syntax element to the reversible coding section 26 to include the RPLR in for example a header of the coded stream of image data, and then proceeds to step ST26.

In step ST26, the image coding device 20dv-2 performs a process of coding the coding object picture. In addition, in the coding process, the reference index assigning section 45-2 sets reference indices by the assigning method which is determined in step ST23.

In step ST27, the image coding device 20dv-2 generates a feature quantity. The feature quantity generating section 41-2 in the image coding device 20dv-2 generates feature quantities from the information generated in the coding process of step ST26, for example vectors (motion vectors and parallax vectors), errors between the coding object blocks and reference blocks, and the like.

In step ST28, the image coding device 20dv-2 assigns reference indices by an assigning method set in advance and performs a coding process when the coding object picture is a picture of a base view and when a plurality of planes of parallax and time are not used as reference pictures. For example, as shown in FIG. 1, a reference index ref_idx = 0 is assigned to the reference picture for temporal prediction, and a reference index ref_idx = 1 is assigned to the reference picture for parallactic prediction. In addition, when the coding object picture is a picture of a base view, the reference index assignments are fixed over an entire sequence. Such a process is performed for each coding object picture.

According to the second embodiment, when temporal prediction or parallactic prediction is performed in a coding process for a dependent view, a reference index of a shorter code length can be assigned to a reference picture used in the prediction system performed frequently. The coding efficiency of the dependent view can therefore be enhanced as in the first embodiment. In addition, the second embodiment eliminates a need for motion detection in the feature quantity generating section as in the first embodiment, so that reference indices can be assigned easily.

<4. Third Embodiment>

A third embodiment will next be described. When image switching is being performed in moving image data, and there is a large image difference between an image before the image switching and an image after the image switching, the performance of temporal prediction is degraded greatly. For example, when a scene change is being made in moving image data, and there is a large image difference between an image before the scene change and an image after the scene change, the performance of temporal prediction is degraded greatly. Thus, when image switching occurs, parallactic prediction is selected to prevent prediction performance from being degraded greatly. That is, a result of detection of image switching corresponds to a feature quantity used as a determination criterion in determining which of temporal prediction and parallactic prediction is dominant within an image. Thus, in the third embodiment, description will be made of a case where a scene change detection result is used as a feature quantity.

[Configuration of Third Embodiment]

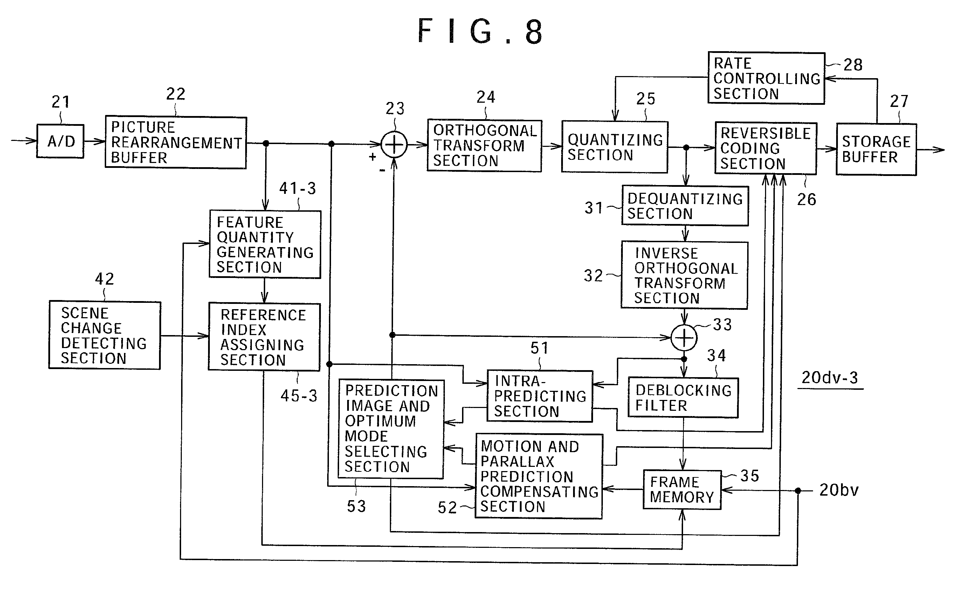

FIG. 8 shows a configuration of the third embodiment. Incidentally, FIG. 8 illustrates a case where a function of setting a method specified in advance as a reference index assigning method when a scene change is detected is provided to the first embodiment. Incidentally, in FIG. 8, parts corresponding to those of the image coding device 20dv-1 according to the first embodiment are identified by the same reference numerals.

An image coding device 20dv-3 is an image processing device for coding the image data of a dependent view. The image coding device 20dv-3 includes an analog-to-digital converting section (A/D converting section) 21, a picture rearrangement buffer 22, a subtracting section 23, an orthogonal transform section 24, a quantizing section 25, a reversible coding section 26, a storage buffer 27, and a rate controlling section 28. The image coding device 20dv-3 also includes a dequantizing section 31, an inverse orthogonal transform section 32, an adding section 33, a deblocking filter 34, and a frame memory 35. The image coding device 20dv-3 further includes a feature quantity generating section 41-3, a scene change detecting section 42, a reference index assigning section 45-3, an intra-predicting section 51, a motion and parallax prediction compensating section 52, and a prediction image and optimum mode selecting section 53.

The A/D converting section 21 converts an analog image signal into digital image data, and outputs the digital image data to the picture rearrangement buffer 22.

The picture rearrangement buffer 22 rearranges frames of the image data output from the A/D converting section 21. The picture rearrangement buffer 22 rearranges the frames according to a GOP (Group of Pictures) structure involved in a coding process, and outputs the image data after the rearrangement to the subtracting section 23, the feature quantity generating section 41-3, the intra-predicting section 51, and the motion and parallax prediction compensating section 52.

The subtracting section 23 is supplied with the image data output from the picture rearrangement buffer 22 and prediction image data selected by the prediction image and optimum mode selecting section 53 to be described later. The subtracting section 23 calculates prediction error data indicating differences between the image data output from the picture rearrangement buffer 22 and the prediction image data supplied from the prediction image and optimum mode selecting section 53. The subtracting section 23 outputs the prediction error data to the orthogonal transform section 24.

The orthogonal transform section 24 subjects the prediction error data output from the subtracting section 23 to an orthogonal transform process such as a discrete cosine transform (DCT), a Karhunen-Loeve transform or the like. The orthogonal transform section 24 outputs transform coefficient data obtained by performing the orthogonal transform process to the quantizing section 25.

The quantizing section 25 is supplied with the transform coefficient data output from the orthogonal transform section 24 and a rate controlling signal from the rate controlling section 28 to be described later. The quantizing section 25 quantizes the transform coefficient data, and outputs the quantized data to the reversible coding section 26 and the dequantizing section 31. In addition, the quantizing section 25 changes a quantization parameter (quantization scale) on the basis of the rate controlling signal from the rate controlling section 28, and thereby changes the bit rate of the quantized data.

The reversible coding section 26 is supplied with the quantized data output from the quantizing section 25 and prediction mode information from the intra-predicting section 51, the motion and parallax prediction compensating section 52, and the prediction image and optimum mode selecting section 53 to be described later. Incidentally, the prediction mode information includes a macroblock type indicating the block size of a coding object block, a prediction mode, a reference index, and the like. The reversible coding section 26 subjects the quantized data to a coding process by variable-length coding or arithmetic coding, for example, thereby generates a coded stream, and outputs the coded stream to the storage buffer 27. In addition, the reversible coding section 26 reversibly codes the prediction mode information, and adds the coded prediction mode information to for example header information of the coded stream.

The storage buffer 27 stores the coded stream from the reversible coding section 26. In addition, the storage buffer 27 outputs the stored coded stream at a transmission speed corresponding to a transmission line.

The rate controlling section 28 monitors the free space of the storage buffer 27, generates the rate controlling signal according to the free space, and outputs the rate controlling signal to the quantizing section 25. The rate controlling section 28 for example obtains information indicating the free space from the storage buffer 27. When the free space is reduced, the rate controlling section 28 makes the bit rate of the quantized data decreased by the rate controlling signal. When the storage buffer 27 has a sufficiently large free space, the rate controlling section 28 makes the bit rate of the quantized data raised by the rate controlling signal.

The dequantizing section 31 subjects the quantized data supplied from the quantizing section 25 to a dequantizing process. The dequantizing section 31 outputs transform coefficient data obtained by performing the dequantizing process to the inverse orthogonal transform section 32.

The inverse orthogonal transform section 32 outputs data obtained by subjecting the transform coefficient data supplied from the dequantizing section 31 to an inverse orthogonal transform process to the adding section 33.

The adding section 33 generates the image data of a reference picture by adding together the data supplied from the inverse orthogonal transform section 32 and the prediction image data supplied from the prediction image and optimum mode selecting section 53. The adding section 33 outputs the image data to the deblocking filter 34 and the intra-predicting section 51.

The deblocking filter 34 performs filter processing to reduce block distortion occurring at a time of image coding. The deblocking filter 34 performs the filter processing to remove the block distortion from the image data supplied from the adding section 33. The deblocking filter 34 outputs the image data after the filter processing to the frame memory 35.

The frame memory 35 retains the image data after the filter processing which image data is supplied from the deblocking filter 34 and the image data of a reference picture supplied from an image coding device 20bv that performs coding for a base view.

The feature quantity generating section 41-3 generates a feature quantity. The feature quantity is information used as a determination criterion for determining which of temporal prediction using correlation between images in a temporal direction and parallactic prediction using correlation between images of different visual points is dominant within an image, that is, performed more frequently when the image data of a dependent view is coded. The feature quantity generating section 41-3 generates feature quantities from information obtained by performing temporal prediction and parallactic prediction.

The feature quantity generating section 41-3 detects a motion vector and a parallax vector for each coding object block using a reference picture, and sets an average value or a variance within an image of the lengths of the detected vectors as a feature quantity. For example, the feature quantity generating section 41-3 sets the image data of an image different in the temporal direction from a coding object picture in the image data output from the picture rearrangement buffer 22 as the image data of a reference picture to be used in temporal prediction. The feature quantity generating section 41-3 detects a motion vector for each coding block using the reference picture for temporal prediction, and sets an average or a variance within an image of the lengths of the detected motion vectors as a feature quantity. In addition, the feature quantity generating section 41-3 sets the image data of another visual point which image data is supplied from the image coding device 20dv as the image data of a reference picture to be used in parallactic prediction. The feature quantity generating section 41-3 detects a parallax vector for each coding object block using the reference picture for parallactic prediction, and sets an average or a variance within the image of the lengths of the detected parallax vectors as a feature quantity.

The feature quantity generating section 41-3 may also set a total value (for example a SAD: Sum of Absolute Differences) or an average value within the image of errors between the blocks of the coding object picture (coding object blocks) and the blocks of the reference picture (reference blocks) when the motion vectors or the parallax vectors are detected as a feature quantity. For example, the feature quantity generating section 41-3 generates a motion vector for each coding object block using the image data output from the picture rearrangement buffer 22 as the image data of a reference picture to be used in temporal prediction. The feature quantity generating section 41-3 sets a total value or an average value within the image of errors between the coding object blocks and the reference blocks when the motion vectors are detected as a feature quantity. In addition, the feature quantity generating section 41-3 detects a parallax vector for each coding object block using the image data of another visual point which image data is supplied from the image coding device 20dv. The feature quantity generating section 41-3 sets a total value or an average value within the image of errors between the coding object blocks and the reference blocks when the parallax vectors are detected as a feature quantity.

The feature quantity generating section 41-3 thus generates the feature quantity, and outputs the generated feature quantity to the reference index assigning section 45-3.

The scene change detecting section 42 performs scene change detection, and outputs a result of the detection to the reference index assigning section 45-3.

On the basis of the feature quantity generated in the feature quantity generating section 41-3, the reference index assigning section 45-3 assigns reference indices to the reference pictures stored in the frame memory 35. On the basis of the feature quantity, the reference index assigning section 45-3 assigns the reference picture used in dominant prediction a reference index having a shorter code length than a reference index assigned to the reference picture used in the other prediction.

When average values within the image of vectors (motion vectors and parallax vectors) are generated as feature quantities, the reference index assigning section 45-3 compares the average value when the reference picture for temporal prediction is used with the average value when the reference picture for parallactic prediction is used. The reference index assigning section 45-3 assigns the reference index of the shorter code length to the reference picture of the smaller average value. In addition, when variances within the image of the vectors are generated as feature quantities, the reference index assigning section 45-3 compares the variance when the reference picture for temporal prediction is used with the variance when the reference picture for parallactic prediction is used. The reference index assigning section 45-3 assigns the reference index of the shorter code length to the reference picture of the smaller variance. Further, when errors between each block of the coding object picture and reference blocks are generated as feature quantities, the reference index assigning section 45-3 compares the errors when the reference picture for temporal prediction is used with the errors when the reference picture for parallactic prediction is used. The reference index assigning section 45-3 assigns the reference index of the shorter code length to the reference picture of the smaller errors.

In addition, the reference index assigning section 45-3 sets a reference index assigning method according to the scene change detection result from the scene change detecting section 42. When a scene change is detected, the reference index assigning section 45-3 assigns the reference picture used in parallactic prediction the reference index of the shorter code length than that of the reference index assigned to the reference picture used in temporal prediction.

The intra-predicting section 51 performs an intra-prediction process in all intra-prediction modes as candidates using the image data of the coding object picture output from the picture rearrangement buffer 22 and the image data supplied from the adding section 33. Further, the intra-predicting section 51 calculates a cost function value for each intra-prediction mode, and selects an intra-prediction mode in which the calculated cost function value is a minimum, that is, an intra-prediction mode in which best coding efficiency is obtained as an optimum intra-prediction mode. The intra-predicting section 51 outputs prediction image data generated in the optimum intra-prediction mode, prediction mode information on the optimum intra-prediction mode, and the cost function value in the optimum intra-prediction mode to the prediction image and optimum mode selecting section 53. In addition, to obtain an amount of generated code which amount is used in calculation of the cost function value, the intra-predicting section 51 outputs, in the intra-prediction process in each intra-prediction mode, the prediction mode information on the intra-prediction mode to the reversible coding section 26. Incidentally, a method implemented in H.264/AVC reference software referred to as a JM (Joint Model), for example, can be cited for the generation of the cost function value.

The motion and parallax prediction compensating section 52 performs a motion and parallax prediction compensating process for each block size of coding object blocks. The motion and parallax prediction compensating section 52 detects a motion vector using the image data after the deblocking filter process which image data is read from the frame memory 35, and detects a parallax vector using the image data of the base view, for each image of each coding object block in the image read from the picture rearrangement buffer 22. Further, the motion and parallax prediction compensating section 52 performs a reference picture compensating process on the basis of the detected vectors, and generates prediction images.

In addition, the motion and parallax prediction compensating section 52 generates a cost function value for each block size of the coding object blocks and each reference picture, and selects the block size and the reference picture minimizing the cost function value as an optimum inter-prediction mode. The motion and parallax prediction compensating section 52 outputs prediction image data generated in the optimum inter-prediction mode, prediction mode information on the optimum inter-prediction mode, and the cost function value in the optimum inter-prediction mode to the prediction image and optimum mode selecting section 53. In addition, to obtain an amount of generated code which amount is used in generation of the cost function value, the motion and parallax prediction compensating section 52 outputs, in an inter-prediction process in each block size, the prediction mode information on the inter-prediction mode to the reversible coding section 26.

The prediction image and optimum mode selecting section 53 compares the cost function value supplied from the intra-predicting section 51 with the cost function value supplied from the motion and parallax prediction compensating section 52, and selects the smaller cost function value as an optimum mode in which best coding efficiency is obtained. In addition, the prediction image and optimum mode selecting section 53 outputs the prediction image data generated in the optimum mode to the subtracting section 23 and the adding section 33. Further, the prediction image and optimum mode selecting section 53 outputs the prediction mode information (the macroblock type, the prediction mode, the reference index and the like) of the optimum mode to the reversible coding section 26. Incidentally, the prediction image and optimum mode selecting section 53 performs intra-prediction or inter-prediction in picture units or slice units.

[Operation of Third Embodiment]

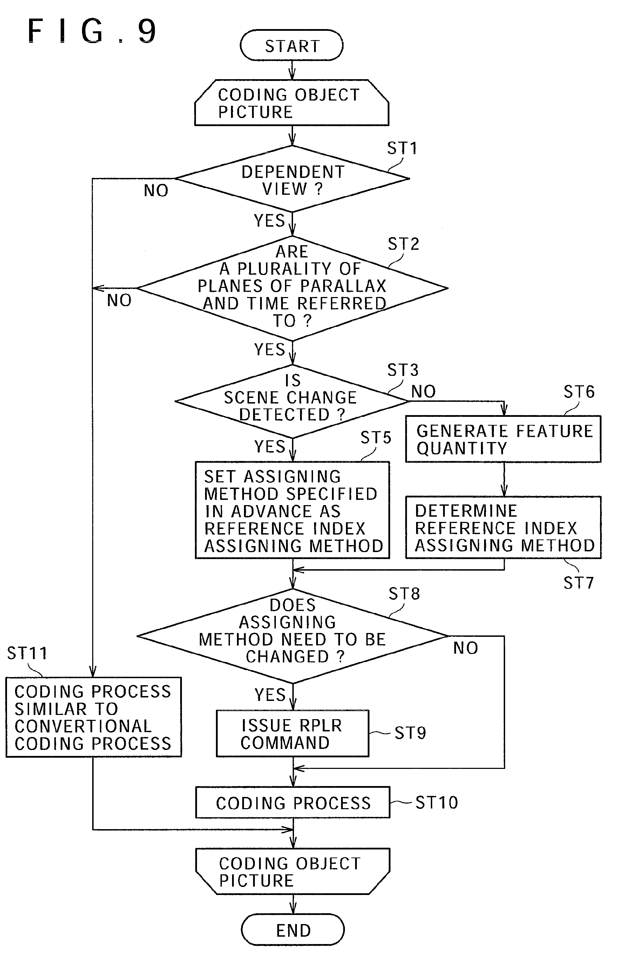

FIG. 9 is a flowchart showing an operation of the third embodiment. Incidentally, in FIG. 9, processes corresponding to those of the first embodiment are identified by the same numerals.

In step ST1, the image coding device 20dv-3 determines whether a coding object picture is a picture of a dependent view. The image coding device 20dv-3 proceeds to step ST2 when the coding object picture is a picture of a dependent view, and proceeds to step ST11 when the coding object picture is a picture of a base view.

In step ST2, the image coding device 20dv-3 determines whether the coding object picture refers to a plurality of planes of parallax or time. When the coding object picture refers to a plurality of planes of at least one of parallax and time, the image coding device 20dv-3 proceeds to step ST3. When the coding object picture refers to only one reference picture, the image coding device 20dv-3 proceeds to step ST11.

In step ST3, the image coding device 20dv-3 determines whether a scene change is detected. When the scene change detecting section 42 in the image coding device 20dv-3 has detected a scene change, and the determination and coding object picture is a first image after the scene change, the image coding device 20dv-3 proceeds to step ST5. When the determination and coding object picture is not the first image after the scene change, the image coding device 20dv-3 proceeds to step ST6.

In step ST5, the image coding device 20dv-3 sets a method specified in advance, that is, a method of assigning a reference index of a shorter code length to parallactic prediction as a reference index assigning method, and then proceeds to step ST8.

In step ST6, the image coding device 20dv-3 generates a feature quantity. The feature quantity generating section 41-3 in the image coding device 20dv-3 generates an average value within the image of parallax vectors detected for each block using a reference picture of a different visual point and an average value within the image of motion vectors detected for each block using a reference picture in a temporal direction, and sets the average values as feature quantities. In addition, the feature quantity generating section 41-3 may set variances of the vectors within the image as feature quantities. Further, the feature quantity generating section 41-3 may perform temporal prediction and parallactic prediction for each block, and generate total values or average values within the image of errors between the coding object blocks and reference blocks as feature quantities. The feature quantity generating section 41-3 thus generates the feature quantities, and then proceeds to step ST7.

In step ST7, the image coding device 20dv-3 determines a reference index assigning method. The reference index assigning section 45-3 in the image coding device 20dv-3 determines a reference index assigning method on the basis of the feature quantities generated in step ST6, and then proceeds to step ST8. The reference index assigning section 45-3 determines an assigning method so as to assign a reference index of a shorter code length to the reference picture used when the vectors of a smaller average value or a smaller variance are calculated, for example. In addition, the reference index assigning section 45-3 determines an assigning method so as to assign a reference index of a shorter code length to the reference picture used in one of the temporal prediction and the parallactic prediction with smaller errors, for example.

In step ST8, the image coding device 20dv-3 determines whether the assigning method needs to be changed. When the assigning method determined in step ST5 or step ST7 is different from a present assigning method, the image coding device 20dv-3 proceeds to step ST9. When the assigning method determined in step ST5 or step ST7 is the same as the present assigning method, the image coding device 20dv-3 proceeds to step ST10.

In step ST9, the image coding device 20dv-3 issues an RPLR (Reference Picture List Reordering) command. The reference index assigning section 45-3 in the image coding device 20dv-3 issues the RPLR command so that an image decoding device can use correct reference pictures on the basis of the reference indices even when the assignments of the reference indices are changed. Specifically, the reference index assigning section 45-3 supplies the RPLR as a syntax element to the reversible coding section 26 to include the RPLR in for example a header of the coded stream of image data, and then proceeds to step ST10.

In step ST10, the image coding device 20dv-3 performs a process of coding the coding object picture. In addition, in the coding process, the reference index assigning section 45-3 sets reference indices by the assigning method for subsequent pictures which assigning method is determined in step ST5 or step ST7.

In step ST11, the image coding device 20dv-3 assigns reference indices by an assigning method set in advance and performs a coding process when the coding object picture is a picture of a base view and when the coding object picture refers to one reference picture. Such a process is performed for each coding object picture.

According to the third embodiment, when temporal prediction or parallactic prediction is performed in coding for a dependent view, a reference index of a shorter code length is assigned to a reference picture used in the prediction system performed frequently. The coding efficiency of the dependent view can therefore be enhanced. Further, when a scene change is detected, parallactic prediction is selected to prevent a significant degradation in prediction performance, and a reference index of a shorter code length is assigned to the reference picture used in parallactic prediction. Thus, even when a scene change occurs in the dependent view, the coding efficiency of the dependent view can be enhanced.

<5. Fourth Embodiment>

A fourth embodiment will next be described. Moving image data can represent not only images of multiple visual points but also an image of a same visual point (2D image). When a dependent view and a base view are images of a same visual point, the performance of parallactic prediction is very high as compared with temporal prediction, and therefore parallactic prediction is selected. That is, a result of detection of image switching from a multiple visual point image to another image (2D image) is a feature quantity that can be used to determine which of temporal prediction and parallactic prediction is performed more frequently within an image. Thus, in the fourth embodiment, description will be made of a case where an image switching detection result is used as a feature quantity.

[Configuration of Fourth Embodiment]

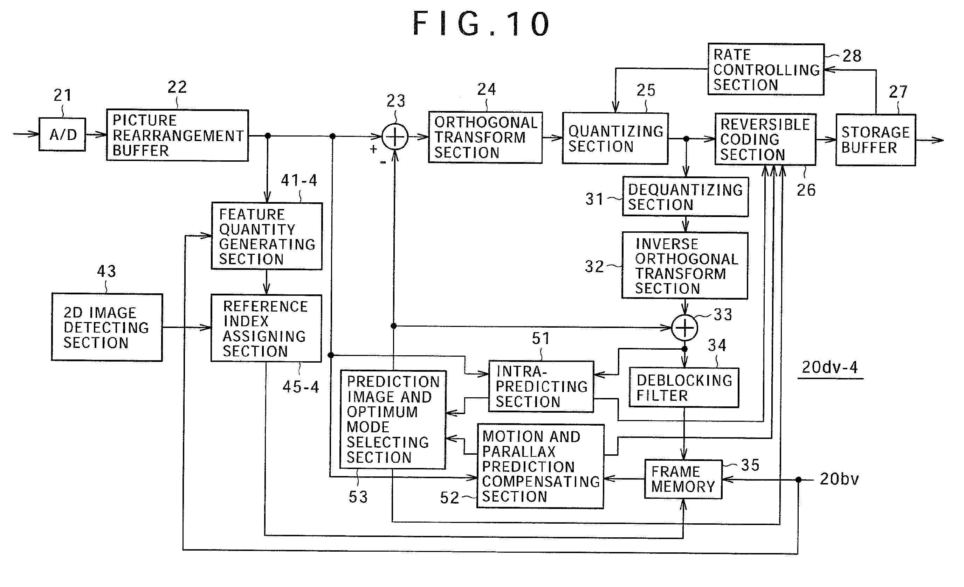

FIG. 10 shows a configuration of the fourth embodiment. Incidentally, FIG. 10 illustrates a case where the first embodiment is provided with a function of setting a method specified in advance as a reference index assigning method when switching from a multiple visual point image to another image is detected. Incidentally, in FIG. 10, parts corresponding to those of the image coding device 20dv-1 according to the first embodiment are identified by the same reference numerals.

An image coding device 20dv-4 is an image processing device for coding the image data of a dependent view. The image coding device 20dv-4 includes an analog-to-digital converting section (A/D converting section) 21, a picture rearrangement buffer 22, a subtracting section 23, an orthogonal transform section 24, a quantizing section 25, a reversible coding section 26, a storage buffer 27, and a rate controlling section 28. The image coding device 20dv-4 also includes a dequantizing section 31, an inverse orthogonal transform section 32, an adding section 33, a deblocking filter 34, and a frame memory 35. The image coding device 20dv-4 further includes a feature quantity generating section 41-4, a 2D image detecting section 43, a reference index assigning section 45-4, an intra-predicting section 51, a motion and parallax prediction compensating section 52, and a prediction image and optimum mode selecting section 53.

The A/D converting section 21 converts an analog image signal into digital image data, and outputs the digital image data to the picture rearrangement buffer 22.

The picture rearrangement buffer 22 rearranges frames of the image data output from the A/D converting section 21. The picture rearrangement buffer 22 rearranges the frames according to a GOP structure involved in a coding process, and outputs the image data after the rearrangement to the subtracting section 23, the feature quantity generating section 41-4, the 2D image detecting section 43, the intra-predicting section 51, and the motion and parallax prediction compensating section 52.

The subtracting section 23 is supplied with the image data output from the picture rearrangement buffer 22 and prediction image data selected by the prediction image and optimum mode selecting section 53 to be described later. The subtracting section 23 calculates prediction error data indicating differences between the image data output from the picture rearrangement buffer 22 and the prediction image data supplied from the prediction image and optimum mode selecting section 53. The subtracting section 23 outputs the prediction error data to the orthogonal transform section 24.

The orthogonal transform section 24 subjects the prediction error data output from the subtracting section 23 to an orthogonal transform process such as a discrete cosine transform (DCT), a Karhunen-Loeve transform or the like. The orthogonal transform section 24 outputs transform coefficient data obtained by performing the orthogonal transform process to the quantizing section 25.

The quantizing section 25 is supplied with the transform coefficient data output from the orthogonal transform section 24 and a rate controlling signal from the rate controlling section 28 to be described later. The quantizing section 25 quantizes the transform coefficient data, and outputs the quantized data to the reversible coding section 26 and the dequantizing section 31. In addition, the quantizing section 25 changes a quantization parameter (quantization scale) on the basis of the rate controlling signal from the rate controlling section 28, and thereby changes the bit rate of the quantized data.

The reversible coding section 26 is supplied with the quantized data output from the quantizing section 25 and prediction mode information from the intra-predicting section 51, the motion and parallax prediction compensating section 52, and the prediction image and optimum mode selecting section 53 to be described later. Incidentally, the prediction mode information includes a macroblock type indicating the block size of a coding object block, a prediction mode, a reference index, and the like. The reversible coding section 26 subjects the quantized data to a coding process by variable-length coding or arithmetic coding, for example, thereby generates a coded stream, and outputs the coded stream to the storage buffer 27. In addition, the reversible coding section 26 reversibly codes the prediction mode information, and adds the coded prediction mode information to for example header information of the coded stream.

The storage buffer 27 stores the coded stream from the reversible coding section 26. In addition, the storage buffer 27 outputs the stored coded stream at a transmission speed corresponding to a transmission line.

The rate controlling section 28 monitors the free space of the storage buffer 27, generates the rate controlling signal according to the free space, and outputs the rate controlling signal to the quantizing section 25. The rate controlling section 28 for example obtains information indicating the free space from the storage buffer 27. When the free space is reduced, the rate controlling section 28 makes the bit rate of the quantized data decreased by the rate controlling signal. When the storage buffer 27 has a sufficiently large free space, the rate controlling section 28 makes the bit rate of the quantized data raised by the rate controlling signal.

The dequantizing section 31 subjects the quantized data supplied from the quantizing section 25 to a dequantizing process. The dequantizing section 31 outputs transform coefficient data obtained by performing the dequantizing process to the inverse orthogonal transform section 32.

The inverse orthogonal transform section 32 outputs data obtained by subjecting the transform coefficient data supplied from the dequantizing section 31 to an inverse orthogonal transform process to the adding section 33.

The adding section 33 generates the image data of a reference picture by adding together the data supplied from the inverse orthogonal transform section 32 and the prediction image data supplied from the prediction image and optimum mode selecting section 53. The adding section 33 outputs the image data to the deblocking filter 34 and the intra-predicting section 51.

The deblocking filter 34 performs filter processing to reduce block distortion occurring at a time of image coding. The deblocking filter 34 performs the filter processing to remove the block distortion from the image data supplied from the adding section 33. The deblocking filter 34 outputs the image data after the filter processing to the frame memory 35.

The frame memory 35 retains the image data after the filter processing which image data is supplied from the deblocking filter 34 and the image data of a reference picture supplied from an image coding device 20bv that performs coding for a base view.

The feature quantity generating section 41-4 generates a feature quantity. The feature quantity is information used as a determination criterion for determining which of temporal prediction using correlation between images in a temporal direction and parallactic prediction using correlation between images of different visual points is dominant within an image, that is, performed more frequently when the image data of a dependent view is coded. The feature quantity generating section 41-4 generates feature quantities from information obtained by performing temporal prediction and parallactic prediction.

The feature quantity generating section 41-4 detects a motion vector and a parallax vector for each coding object block using a reference picture, and sets an average value or a variance within an image of the lengths of the detected vectors as a feature quantity. For example, the feature quantity generating section 41-4 sets the image data of an image different in the temporal direction from a coding object picture in the image data output from the picture rearrangement buffer 22 as the image data of a reference picture to be used in temporal prediction. The feature quantity generating section 41-4 detects a motion vector for each coding block using the reference picture for temporal prediction, and sets an average or a variance within an image of the lengths of the detected motion vectors as a feature quantity. In addition, the feature quantity generating section 41-4 sets the image data of another visual point which image data is supplied from the image coding device 20dv as the image data of a reference picture to be used in parallactic prediction. The feature quantity generating section 41-4 detects a parallax vector for each coding object block using the reference picture for parallactic prediction, and sets an average or a variance within the image of the lengths of the detected parallax vectors as a feature quantity.

The feature quantity generating section 41-4 may also set a total value (for example a SAD: Sum of Absolute Differences) or an average value within the image of errors between the blocks of the coding object picture (coding object blocks) and the blocks of the reference picture (reference blocks) when the motion vectors or the parallax vectors are detected as a feature quantity. For example, the feature quantity generating section 41-4 generates a motion vector for each coding object block using the image data output from the picture rearrangement buffer 22 as the image data of a reference picture to be used in temporal prediction. The feature quantity generating section 41-4 sets a total value or an average value within the image of errors between the coding object blocks and the reference blocks when the motion vectors are detected as a feature quantity. In addition, the feature quantity generating section 41-4 detects a parallax vector for each coding object block using the image data of another visual point which image data is supplied from the image coding device 20dv. The feature quantity generating section 41-4 sets a total value or an average value within the image of errors between the coding object blocks and the reference blocks when the parallax vectors are detected as a feature quantity.

The feature quantity generating section 41-4 thus generates the feature quantity, and outputs the generated feature quantity to the reference index assigning section 45-4.

The 2D image detecting section 43 determines whether the coding object picture is a 2D image. For example, the 2D image detecting section 43 determines whether the image data of the base view and the image data of the coding object picture are the same. When the image data of the base view and the image data of the coding object picture are not the same, the 2D image detecting section 43 determines that the coding object picture is a multiple visual point image. When the image data of the base view and the image data of the coding object picture are the same, the 2D image detecting section 43 determines that the coding object picture is a 2D image. The 2D image detecting section 43 outputs the detection result to the reference index assigning section 45-4. In a case where whether the coding object picture is a 2D image or a multiple visual point image is indicated by a flag or the like as attribute information of the image data, the 2D image detecting section 43 may use this attribute information as the detection result.

On the basis of the feature quantity generated in the feature quantity generating section 41-4, the reference index assigning section 45-4 assigns reference indices to the reference pictures stored in the frame memory 35. On the basis of the feature quantity, the reference index assigning section 45-4 assigns the reference picture used in dominant prediction a reference index having a shorter code length than a reference index assigned to the reference picture used in the other prediction.

When average values within the image of vectors (motion vectors and parallax vectors) are generated as feature quantities, the reference index assigning section 45-4 compares the average value when the reference picture for temporal prediction is used with the average value when the reference picture for parallactic prediction is used. The reference index assigning section 45-4 assigns the reference index of the shorter code length to the reference picture of the smaller average value. In addition, when variances within the image of the vectors are generated as feature quantities, the reference index assigning section 45-4 compares the variance when the reference picture for temporal prediction is used with the variance when the reference picture for parallactic prediction is used. The reference index assigning section 45-4 assigns the reference index of the shorter code length to the reference picture of the smaller variance. Further, when errors between each block of the coding object picture and reference blocks are generated as feature quantities, the reference index assigning section 45-4 compares the errors when the reference picture for temporal prediction is used with the errors when the reference picture for parallactic prediction is used. The reference index assigning section 45-4 assigns the reference index of the shorter code length to the reference picture of the smaller errors.

In addition, the reference index assigning section 45-4 sets a reference index assigning method according to the detection result from the 2D image detecting section 43. When switching from a multiple visual point image to another image is detected, the reference index assigning section 45-4 assigns the reference picture used in parallactic prediction the reference index of the shorter code length than that of the reference index assigned to the reference picture used in temporal prediction.

The intra-predicting section 51 performs an intra-prediction process in all intra-prediction modes as candidates using the image data of the coding object picture output from the picture rearrangement buffer 22 and the image data supplied from the adding section 33. Further, the intra-predicting section 51 calculates a cost function value for each intra-prediction mode, and selects an intra-prediction mode in which the calculated cost function value is a minimum, that is, an intra-prediction mode in which best coding efficiency is obtained as an optimum intra-prediction mode. The intra-predicting section 51 outputs prediction image data generated in the optimum intra-prediction mode, prediction mode information on the optimum intra-prediction mode, and the cost function value in the optimum intra-prediction mode to the prediction image and optimum mode selecting section 53. In addition, to obtain an amount of generated code which amount is used in calculation of the cost function value, the intra-predicting section 51 outputs, in the intra-prediction process in each intra-prediction mode, the prediction mode information on the intra-prediction mode to the reversible coding section 26. Incidentally, a method implemented in H.264/AVC reference software referred to as a JM (Joint Model), for example, can be cited for the generation of the cost function value.

The motion and parallax prediction compensating section 52 performs a motion and parallax prediction compensating process for each block size of coding object blocks. The motion and parallax prediction compensating section 52 detects a motion vector using the image data after the deblocking filter process which image data is read from the frame memory 35, and detects a parallax vector using the image data of the base view, for each image of each coding object block in the image read from the picture rearrangement buffer 22. Further, the motion and parallax prediction compensating section 52 performs a reference picture compensating process on the basis of the detected vectors, and generates prediction images.

In addition, the motion and parallax prediction compensating section 52 generates a cost function value for each block size of the coding object blocks and each reference picture, and selects the block size and the reference picture minimizing the cost function value as an optimum inter-prediction mode. The motion and parallax prediction compensating section 52 outputs prediction image data generated in the optimum inter-prediction mode, prediction mode information on the optimum inter-prediction mode, and the cost function value in the optimum inter-prediction mode to the prediction image and optimum mode selecting section 53. In addition, to obtain an amount of generated code which amount is used in generation of the cost function value, the motion and parallax prediction compensating section 52 outputs, in an inter-prediction process in each block size, the prediction mode information on the inter-prediction mode to the reversible coding section 26.

The prediction image and optimum mode selecting section 53 compares the cost function value supplied from the intra-predicting section 51 with the cost function value supplied from the motion and parallax prediction compensating section 52, and selects the smaller cost function value as an optimum mode in which best coding efficiency is obtained. In addition, the prediction image and optimum mode selecting section 53 outputs the prediction image data generated in the optimum mode to the subtracting section 23 and the adding section 33. Further, the prediction image and optimum mode selecting section 53 outputs the prediction mode information (the macroblock type, the prediction mode, the reference index and the like) of the optimum mode to the reversible coding section 26. Incidentally, the prediction image and optimum mode selecting section 53 performs intra-prediction or inter-prediction in picture units or slice units.

[Operation of Fourth Embodiment]

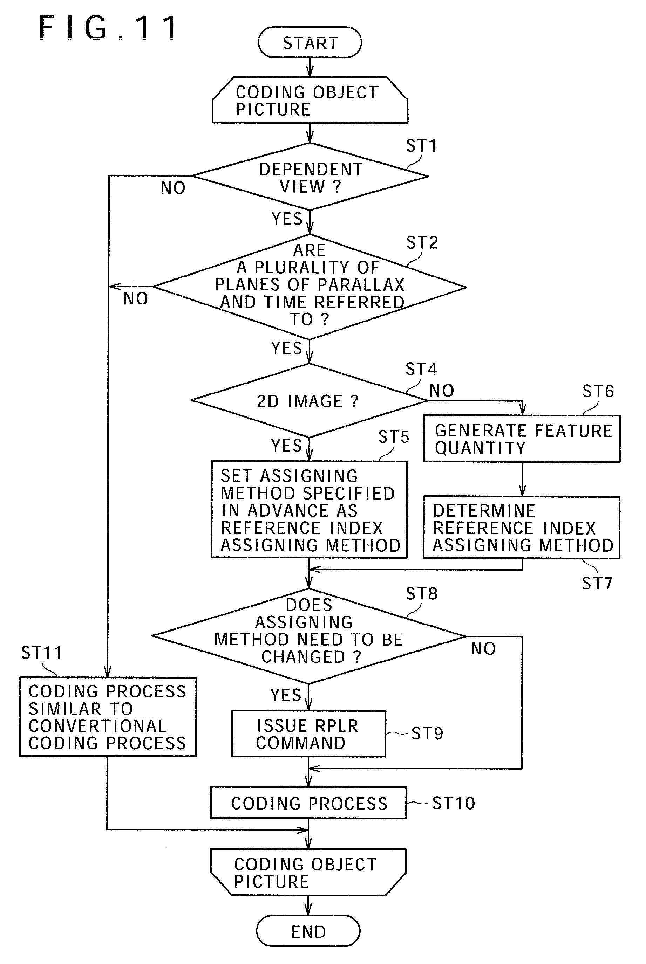

FIG. 11 is a flowchart showing an operation of the fourth embodiment. Incidentally, in FIG. 11, processes corresponding to those of the first embodiment are identified by the same numerals.

In step ST1, the image coding device 20dv-4 determines whether a coding object picture is a picture of a dependent view. The image coding device 20dv-4 proceeds to step ST2 when the coding object picture is a picture of a dependent view, and proceeds to step ST11 when the coding object picture is a picture of a base view.

In step ST2, the image coding device 20dv-4 determines whether the coding object picture refers to a plurality of planes of parallax or time. When the coding object picture refers to a plurality of planes of at least one of parallax and time, the image coding device 20dv-4 proceeds to step ST4. When the coding object picture refers to only one reference picture, the image coding device 20dv-4 proceeds to step ST11.

In step ST4, the image coding device 20dv-4 determines whether it is detected that the coding object picture is a 2D image. When it is detected that the coding object picture is a 2D image, the image coding device 20dv-4 proceeds to step ST5. When it is not detected that the coding object picture is a 2D image, that is, when it is detected that the coding object picture is a multiple visual point image, the image coding device 20dv-4 proceeds to step ST6.

In step ST5, the image coding device 20dv-4 sets a method specified in advance, that is, a method of assigning a reference index of a shorter code length to a reference picture used in parallactic prediction as a reference index assigning method, and then proceeds to step ST8.

In step ST6, the image coding device 20dv-4 generates a feature quantity. The feature quantity generating section 41-4 in the image coding device 20dv-4 generates an average value within the image of parallax vectors detected for each block using a reference picture of a different visual point and an average value within the image of motion vectors detected for each block using a reference picture in a temporal direction, and sets the average values as feature quantities. In addition, the feature quantity generating section 41-4 may set variances of the vectors within the image as feature quantities. Further, the feature quantity generating section 41-4 may perform temporal prediction and parallactic prediction for each block, and generate total values or average values within the image of errors between the coding object blocks and reference blocks as feature quantities. The feature quantity generating section 41-4 thus generates the feature quantities, and then proceeds to step ST7.

In step ST7, the image coding device 20dv-4 determines a reference index assigning method. The reference index assigning section 45-4 in the image coding device 20dv-4 determines a reference index assigning method on the basis of the feature quantities generated in step ST6, and then proceeds to step ST8. The reference index assigning section 45-4 determines an assigning method so as to assign a reference index of a shorter code length to the reference picture used when the vectors of a smaller average value or a smaller variance are calculated, for example. In addition, the reference index assigning section 45-4 determines an assigning method so as to assign a reference index of a shorter code length to the reference picture used in one of the temporal prediction and the parallactic prediction with smaller errors, for example.

In step ST8, the image coding device 20dv-4 determines whether the assigning method needs to be changed. When the assigning method determined in step ST5 or step ST7 is different from a present assigning method, the image coding device 20dv-4 proceeds to step ST9. When the assigning method determined in step ST5 or step ST7 is the same as the present assigning method, the image coding device 20dv-4 proceeds to step ST10.

In step ST9, the image coding device 20dv-4 issues an RPLR (Reference Picture List Reordering) command. The reference index assigning section 45-4 in the image coding device 20dv-4 issues the RPLR command so that an image decoding device can use correct reference pictures on the basis of the reference indices even when the assignments of the reference indices are changed. Specifically, the reference index assigning section 45-4 supplies the RPLR as a syntax element to the reversible coding section 26 to include the RPLR in for example a header of the coded stream of image data, and then proceeds to step ST10.

In step ST10, the image coding device 20dv-4 performs a process of coding the coding object picture. In addition, in the coding process, the reference index assigning section 45-4 sets reference indices by the assigning method for subsequent pictures which assigning method is determined in step ST5 or step ST7.

In step ST11, the image coding device 20dv-4 assigns reference indices by an assigning method set in advance and performs a coding process when the coding object picture is a picture of a base view and when the coding object picture refers to one reference picture. Such a process is performed for each coding object picture.

According to the fourth embodiment, when temporal prediction or parallactic prediction is performed in a coding process for a dependent view, a reference index of a shorter code length is assigned to a reference picture used in the prediction system performed frequently. The coding efficiency of the dependent view can therefore be enhanced. Further, even when switching is performed from a multiple visual point image to a 2D image, in the case of the 2D image, a reference index of a shorter code length is assigned to the reference picture used in parallactic prediction. Thus, even when the dependent view is switched to a 2D image, the coding efficiency of the dependent view can be enhanced.

<6. Fifth Embodiment>

As in a B-picture of Cam1 in FIG. 1, when L0 prediction (LIST_0) and L1 prediction (LIST_1) each indicate reference pictures for temporal prediction and parallactic prediction, and reference indices are independently assigned to each list, reference pictures assigned a same reference index in L0 prediction and L1 prediction may be used for different prediction systems. For example, a reference index ref_idx = 0 may be assigned to a reference picture for temporal prediction in L0 prediction (LIST_0), and a reference index ref_idx = 0 may be assigned to a reference picture for parallactic prediction in L1 prediction (LIST_1).

In addition, in bidirectional prediction at a B-picture, reference pictures of a same reference index in L0 prediction (LIST_0) and L1 prediction (LIST_1) are used, and average values of the reference pictures are set as a prediction image.

Thus, when a same reference index is used for different prediction systems in bidirectional prediction at a B-picture, coding efficiency may be decreased. For example, when there is a luminance difference between a base view and a dependent view, an effect of the luminance difference appears in a prediction image, so that coding efficiency may be decreased. In addition, for example, when flashlight is emitted and the luminance of a dependent view changes with the passage of time, an effect of the emission of the flashlight appears in a prediction image, so that coding efficiency may be decreased.

Accordingly, the above-described reference index assigning sections 45-1 to 45-4 assign reference indices such that pictures of a same reference index represent reference pictures of a same prediction system when L0 prediction (LIST_0) and L1 prediction (LIST_1) each indicate reference pictures for temporal prediction and parallactic prediction.

This prevents a decrease in coding efficiency due to the use of reference pictures for different prediction systems when a prediction image is generated using the reference pictures of a same reference index in bidirectional prediction.

<7. Configuration in Case where Image Coding is Performed by Software Processing>

Further, the image processing device may be a computer device that performs the series of processes described above by a program.

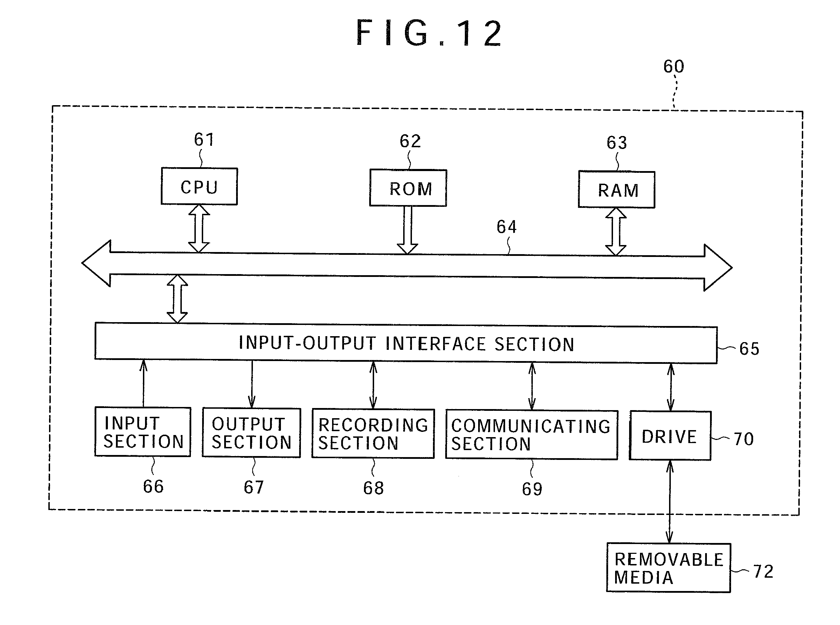

FIG. 12 is a diagram illustrating a configuration of the computer device that performs the series of processes described above by a program. A CPU (Central Processing Unit) 61 of the computer device 60 performs various kinds of processing according to a computer program stored in a ROM (Read Only Memory) 62 or a recording section 68.

A RAM (Random Access Memory) 63 stores the computer program executed by the CPU 61, data, and the like as appropriate. The CPU 61, the ROM 62, and the RAM 63 are interconnected by a bus 64.

The CPU 61 is also connected to an input-output interface 65 via the bus 64. The input-output interface 65 is connected with an input section 66 formed by a touch panel, a keyboard, a mouse, a microphone and the like, and an output section 67 formed by a display and the like. The CPU 61 performs various kinds of processing in response to a command input from the input section 66. The CPU 61 then outputs a result of the processing to the output section 67.

The recording section 68 connected to the input-output interface 65 is formed by a hard disk or an SSD (Solid State Drive), for example. The computer program executed by the CPU 61 and various kinds of data are recorded in the recording section 68. A communicating section 69 communicates with an external device via wired or wireless communication media such as networks including the Internet and a local area network, digital broadcasting, and the like. In addition, the computer device 60 may obtain the computer program via the communicating section 69, and record the computer program in the ROM 62 or the recording section 68.

A drive 70 drives removable media 72 such as a magnetic disk, an optical disk, a magneto-optical disk, a semiconductor memory and the like when these removable media are loaded into the drive 70, and obtains a computer program, data and the like recorded on the removable media 72. The computer program and the data obtained are transferred to the ROM 62, the RAM 63, or the recording section 68 as required.

The CPU 61 reads and executes the computer program for performing the series of processes described above, and codes the image data of multiple visual point images recorded in the recording section 68 or the removable media 72 or the image data of multiple visual point images supplied via the communicating section 69.

It is to be noted that the present disclosure should not be construed so as to be limited to the above-described embodiments. For example, multiple visual point images are not limited to three images, but may be images of two visual points. The embodiments of the present disclosure disclose the present technology in a form of illustrations, and it is obvious that modifications and substitutions in the embodiments can be made by those skilled in the art without departing from the spirit of the present disclosure. That is, in order to determine the spirit of the present disclosure, the section of claims is to be considered.

In an image processing device and an image processing method according to an embodiment of the present disclosure, a feature quantity used as a determination criterion for determining which of a temporal prediction using correlation between images in a temporal direction and a parallactic prediction using correlation between images of different visual points is dominant in image coding is generated, and reference indices are assigned to reference pictures used in the predictions on a basis of the feature quantity. For example, the reference picture used in the dominant prediction is assigned the reference index having a shorter code length than the reference index assigned to the reference picture used in the other prediction. Thus, an amount of code of the reference indices can be reduced, and coding efficiency in the coding of multiple visual point images can be improved. Thus, the present technology is applicable to imaging devices for generating and coding multiple visual point images, editing devices for editing and coding multiple visual point images, recording devices for coding multiple visual point images and recording the multiple visual point images on a recording medium, and the like.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

The present disclosure contains subject matter related to that disclosed in Japanese Priority Patent Application JP 2010-161303 filed in the Japan Patent Office on July 16, 2010, the entire content of which is hereby incorporated by reference.

**Claims**

1.  An image processing device comprising:

    a feature quantity generating section configured to generate a feature quantity used as a determination criterion for determining which of a temporal prediction using correlation between images in a temporal direction and a parallactic prediction using correlation between images of different visual points is dominant in image coding; and
    a reference index assigning section configured to assign reference indices to reference pictures used in said predictions on a basis of the feature quantity generated by said feature quantity generating section.

2.  The image processing device according to claim 1, wherein said reference index assigning section assigns the reference picture used in said dominant prediction the reference index having a shorter code length than the reference index assigned to the reference picture used in the other prediction.

3.  The image processing device according to claim 2, wherein said feature quantity generating section generates said feature quantity from information obtained by said predictions.

4.  The image processing device according to claim 3, wherein said feature quantity generating section performs detection of an image switching position, and uses a result of the detection as said feature quantity.

5.  The image processing device according to claim 3, wherein said feature quantity generating section detects a motion vector and a parallax vector using a coding object picture and the reference pictures before coding of the coding object picture, and generates said feature quantities from the detected vectors or errors between a coding object block and reference blocks when the vectors are detected.

6.  The image processing device according to claim 3, wherein said feature quantity generating section generates said feature quantity from information obtained by said predictions in image coding performed before coding of a coding object picture.

7.  The image processing device according to claim 6, wherein said feature quantity generating section generates said feature quantity from one of a motion vector and a parallax vector detected using a coding object picture and the reference pictures, errors between a coding object block and reference blocks when the vectors are detected, a cost function value, and a statistic indicating a ratio of a reference index.

8.  The image processing device according to claim 4, wherein said feature quantity generating section performs scene change detection as detection of said image switching position, and uses a result of the detection as said feature quantity, and
    when a scene change is detected, said reference index assigning section assigns the reference picture used in the parallactic prediction the reference index having a shorter code length than the reference index assigned to the reference picture used in the temporal prediction.

9.  The image processing device according to claim 4, wherein said feature quantity generating section performs detection of image switching from a multiple visual point image to another image as detection of said image switching position, and uses a result of the detection as said feature quantity, and

when image switching from a multiple visual point image to another image is detected, said reference index assigning section assigns the reference picture used in the parallactic prediction the reference index having a shorter code length than the reference index assigned to the reference picture used in the temporal prediction.

10. The image processing device according to claim 2, wherein
when said reference index assigning section assigns the reference indices to the reference pictures used in the temporal prediction and the parallactic prediction in each of L0 prediction and L1 prediction, said reference index assigning section assigns a same reference index in each of the temporal prediction and the parallactic prediction.

11. An image processing method comprising:

generating a feature quantity used as a determination criterion for determining which of a temporal prediction using correlation between images in a temporal direction and a parallactic prediction using correlation between images of different visual points is dominant in image coding; and
assigning reference indices to reference pictures used in said predictions on a basis of the generated feature quantity.

EP 2 408 208 A1

# F I G . 2

11L

LEFT VISUAL POINT
IMAGE GENERATING
DEVICE

11C

CENTRAL VISUAL POINT
IMAGE GENERATING
DEVICE

11R

RIGHT VISUAL POINT
IMAGE GENERATING
DEVICE

20

MULTIPLE VISUAL
POINT CODING
DEVICE

# FIG. 3

EP 2 408 208 A1

# F I G . 4

```
                    ┌─────────┐
                    │  START  │
                    └────┬────┘
                         ↓
              ┌──────────────────────┐
              │ CODING OBJECT        │
              │ PICTURE              │
              └──────────┬───────────┘
                         ↓                    ST1
                   ╱──────────────╲
           NO     ╱  DEPENDENT     ╲
        ←────────╱    VIEW ?        ╲
                  ╲                 ╱
                   ╲───────────────╱
                         │ YES
                         ↓                    ST2
                   ╱──────────────────╲
                  ╱      ARE           ╲
                 ╱ A PLURALITY OF       ╲
     NO         ╱ PLANES OF PARALLAX     ╲
   ←───────────╲  AND TIME REFERRED     ╱
                ╲       TO ?           ╱
                 ╲────────────────────╱
                         │ YES
                         ↓
              ┌──────────────────────┐
              │ GENERATE FEATURE     │── ST6
              │ QUANTITY             │
              └──────────┬───────────┘
                         ↓
              ┌──────────────────────┐
              │ DETERMINE            │
              │ REFERENCE INDEX      │── ST7
              │ ASSIGNING METHOD     │
              └──────────┬───────────┘
                         ↓                    ST8
                   ╱──────────────╲
                  ╱     DOES       ╲
                 ╱   ASSIGNING      ╲    NO
                ╲ METHOD NEED TO BE  ╱ ──────→
                 ╲   CHANGED ?      ╱
                  ╲───────────────╱
                         │ YES
                         ↓
              ┌──────────────────────┐
              │ ISSUE RPLR           │── ST9
              │ COMMAND              │
              └──────────┬───────────┘
                         ↓
              ┌──────────────────────┐
              │ CODING PROCESS       │── ST10
              └──────────┬───────────┘
                         ↓
              ┌──────────────────────┐
              │ CODING OBJECT        │
              │ PICTURE              │
              └──────────┬───────────┘
                         ↓
                    ┌─────────┐
                    │   END   │
                    └─────────┘
```

ST11
CODING PROCESS
SIMILAR TO
CONVERTIONAL
CODING PROCESS

# F I G . 5

21 A/D

22a PICTURE REARRANGEMENT BUFFER

23 (+/-)

24 ORTHOGONAL TRANSFORM SECTION

25 QUANTIZING SECTION

26 REVERSIBLE CODING SECTION

27 STORAGE BUFFER

28 RATE CONTROLLING SECTION

31 DEQUANTIZING SECTION

32 INVERSE ORTHOGONAL TRANSFORM SECTION

33 (+)

34 DEBLOCKING FILTER

35 FRAME MEMORY

51 INTRA-PREDICTING SECTION

52a MOTION AND PARALLAX PREDICTION COMPENSATING SECTION

53 PREDICTION IMAGE AND OPTIMUM MODE SELECTING SECTION

41-2 FEATURE QUANTITY GENERATING SECTION

45-2 REFERENCE INDEX ASSIGNING SECTION

20dv-2

20bv

# F I G . 6

Base View

| Ib1 (Xi) | Bsb2 (Xb) | Pb3 (Xp) | Bsb4s |

Dependent View

| Pdv1 (Xpd) | Bdv2 | Pdv3 | Bdv4 |

# F I G . 7

```
                    ┌─────────────┐
                    │    START    │
                    └──────┬──────┘
                           ▼
              ┌───────────────────────┐
              │  CODING OBJECT        │
              │  PICTURE              │
              └───────────┬───────────┘
                          ▼                    ST21
                    ◇─────────────◇
         NO         │  DEPENDENT  │
    ◄───────────────│   VIEW ?    │
                    ◇─────────────◇
                          │ YES
                          ▼                    ST22
                    ◇───────────────◇
                    │     ARE       │
         NO         │ A PLURALITY OF│
    ◄───────────────│PLANES OF PARALLAX│
                    │AND TIME REFERRED│
                    │     TO ?      │
                    ◇───────────────◇
                          │ YES
                          ▼
              ┌───────────────────────┐
              │  DETERMINE            │
              │  REFERENCE INDEX      ├── ST23
              │  ASSIGNING METHOD     │
              └───────────┬───────────┘
                          ▼                    ST24
                    ◇───────────────◇
                    │     DOES      │
                    │  ASSIGNING    │        NO
                    │METHOD NEED TO BE│────────────►
                    │  CHANGED ?    │
                    ◇───────────────◇
                          │ YES
                          ▼
ST28                ┌──────────────┐
                    │  ISSUE RPLR  ├── ST25
┌──────────────┐    │  COMMAND     │
│ CODING PROCESS│   └──────┬───────┘
│ SIMILAR TO    │          ▼◄──────────
│ CONVERTIONAL  │   ┌──────────────┐
│ CODING PROCESS│   │CODING PROCESS├── ST26
└──────┬───────┘    └──────┬───────┘
       │                   ▼
       │            ┌──────────────┐
       │            │GENERATE FEATURE├── ST27
       │            │QUANTITY      │
       │            └──────┬───────┘
       └──────────────────►▼
              ┌───────────────────────┐
              │  CODING OBJECT        │
              │  PICTURE              │
              └───────────┬───────────┘
                          ▼
                    ┌─────────────┐
                    │     END     │
                    └─────────────┘
```

# F I G . 8

EP 2 408 208 A1

# FIG.9

```
                    START

            CODING OBJECT
            PICTURE

                              ST1
            DEPENDENT
  NO        VIEW ?
            YES

                              ST2
            ARE
            A PLURALITY OF
            PLANES OF PARALLAX
  NO        AND TIME REFERRED
            TO ?
            YES

                    ST3
            IS                      NO                      ST6
            SCENE CHANGE
            DETECTED ?                      GENERATE FEATURE
                              ST5           QUANTITY
            YES

            SET ASSIGNING
            METHOD SPECIFIED           DETERMINE
            IN ADVANCE AS              REFERENCE INDEX
            REFERENCE INDEX            ASSIGNING METHOD
            ASSIGNING METHOD
                                                ST7

                              ST8
            DOES
            ASSIGNING
            METHOD NEED TO BE
            CHANGED ?                 NO
  ST11
            YES
  CODING PROCESS
  SIMILAR TO          ISSUE RPLR
  CONVERTIONAL        COMMAND        ST9
  CODING PROCESS

            CODING PROCESS           ST10

            CODING OBJECT
            PICTURE

                    END
```

# FIG.10

EP 2 408 208 A1

# FIG.11

START

CODING OBJECT
PICTURE

ST1
DEPENDENT
VIEW ?

NO

YES

ST2
ARE
A PLURALITY OF
PLANES OF PARALLAX
AND TIME REFERRED
TO ?

NO

YES

ST4
2D IMAGE ?

NO

ST6
GENERATE FEATURE
QUANTITY

YES

ST5
SET ASSIGNING
METHOD SPECIFIED
IN ADVANCE AS
REFERENCE INDEX
ASSIGNING METHOD

DETERMINE
REFERENCE INDEX
ASSIGNING METHOD

ST7

ST8
DOES
ASSIGNING
METHOD NEED TO BE
CHANGED ?

NO

ST11
CODING PROCESS
SIMILAR TO
CONVERTIONAL
CODING PROCESS

YES

ISSUE RPLR
COMMAND

ST9

CODING PROCESS

ST10

CODING OBJECT
PICTURE

END

34

# FIG.12

60

61 CPU

62 ROM

63 RAM

64

65 INPUT-OUTPUT INTERFACE SECTION

66 INPUT SECTION

67 OUTPUT SECTION

68 RECORDING SECTION

69 COMMUNICATING SECTION

70 DRIVE

72 REMOVABLE MEDIA

EP 2 408 208 A1

EP 2 408 208 A1

Europäisches
Patentamt

European
Patent Office

Office européen
des brevets

# EUROPEAN SEARCH REPORT

Application Number

EP 11 17 0917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 793 609 A2 (MITSUBISHI ELECTRIC CORP [JP]) 6 June 2007 (2007-06-06) <br> * paragraph [0079] - paragraph [0102] * <br> * figures 7,10,13 * <br> ----- | 1-11 | INV. <br> H04N7/26 <br> H04N7/50 <br> H04N13/00 |
| X | POURAZAD M T ET AL: "A new prediction structure for multiview video coding", DIGITAL SIGNAL PROCESSING, 2009 16TH INTERNATIONAL CONFERENCE ON, IEEE, PISCATAWAY, NJ, USA, <br> 5 July 2009 (2009-07-05), pages 1-5, XP031510250, <br> ISBN: 978-1-4244-3297-4 <br> * the whole document * <br> ----- | 1-11 | |
| A | CAGDAS BILEN ET AL: "A Multi-View Video Codec Based on H.264", IMAGE PROCESSING, 2006 IEEE INTERNATIONAL CONFERENCE ON, IEEE, PI, <br> 1 October 2006 (2006-10-01), pages 541-544, XP031048693, <br> ISBN: 978-1-4244-0480-3 <br> * the whole document * <br> ----- | 1-11 | TECHNICAL FIELDS SEARCHED (IPC) <br><br> H04N |
| A | US 2009/262804 A1 (PANDIT PURVIN BIBHAS [US] ET AL) 22 October 2009 (2009-10-22) <br> * paragraphs [0029]-[0037], [0177]-[0182] * <br> * figure 7 * <br> ----- | 1-11 | |

The present search report has been drawn up for all claims

| Place of search | Date of completion of the search | Examiner |
|---|---|---|
| Munich | 7 October 2011 | Montoneri, Fabio |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

36

**ANNEX TO THE EUROPEAN SEARCH REPORT
ON EUROPEAN PATENT APPLICATION NO.**

EP 11 17 0917

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2011

| Patent document cited in search report | | Publication date | Patent family member(s) | | Publication date |
|---|---|---|---|---|---|
| EP 1793609 | A2 | 06-06-2007 | JP | 2007159111 A | 21-06-2007 |
| US 2009262804 | A1 | 22-10-2009 | EP | 2090110 A2 | 19-08-2009 |
| | | | JP | 2010507275 A | 04-03-2010 |
| | | | KR | 20090077907 A | 16-07-2009 |
| | | | WO | 2008048499 A2 | 24-04-2008 |

EPO FORM P0459

For more details about this annex : see Official Journal of the European Patent Office, No. 12/82

**EP 2 408 208 A1**

## REFERENCES CITED IN THE DESCRIPTION

### Patent documents cited in the description

- JP 2010063092 A
- JP 2010161303 A